# EUROPÄISCHE PATENTSCHRIFT

(11) **EP 3 368 259 B1**
(45) Veröffentlichungstag und Bekanntmachung des Hinweises auf die Patenterteilung: **04.12.2024**
(21) Anmeldenummer: 16785346.4
(22) Anmeldetag: 12.10.2016
(51) Int. Cl.: B29C 31/00, B29C 70/52, B29C 70/68, B29C 70/74, B29C 70/78, B29C 70/86, B29D 99/00

(54) **MASCHINENSYSTEM ZUR HERSTELLUNG EINES HYBRIDBAUTEILS**
MACHINE SYSTEM FOR PRODUCING A HYBRID COMPONENT
SYSTÈME MACHINE POUR LA FABRICATION D'UNE PIÈCE HYBRIDE

(30) Priorität: 27.10.2015 DE 102015013915
(43) Veröffentlichungstag der Anmeldung: 05.09.2018
(73) Patentinhaber: 9T Labs AG, 8048 Zurich (CH)
(72) Erfinder: EICHENHOFER, Martin, 88693 Deggenhausertal (DE); EICHENHOFER, Florian, 88693 Deggenhausertal (DE)
(74) Vertreter: Karl, Christof
(86) Internationale Anmeldenummer: PCT/EP2016/001690
(87) Internationale Veröffentlichungsnummer: WO 2017/071794

(56) Entgegenhaltungen:
- DE-A1- 102012 109 671
- DE-A1- 102014 006 706
- DE-U1- 202004 011 250
- US-A1- 2009 112 343
- UNKNOWN: "Process choice and production layout", MANAGEMENT & DEVELOPMENT CENTER, 11 April 2008 (2008-04-11), 11-04-2008, pages 1 - 16, XP002766211, Retrieved from the Internet <URL:https://web.archive.org/web/20080411022735/http://www.mdcegypt.com/Pages/Operation%20Management/Production%20&%20Operation%20Management/Facility%20Layout/Group%20Technology/Process%20choice%20and%20production%20layout1.asp> [retrieved on 20170120]

## Beschreibung

Die vorliegende Erfindung betrifft ein Verfahren zur Herstellung einer Tragstruktur als Hybridbauteil gemäß dem Oberbegriff des Anspruches 1 und ein Maschinensystem gemäß dem Oberbegriff des Anspruches 12.

Tragstrukturen umfassen eine Grundstruktur und eine Verstärkungsstruktur. Als Grundstrukturen werden beispielsweise Stützen, Platten, Scheiben, Kuppeln oder Rotationsteilellipsoide eingesetzt. Um eine ausreichende Tragfähigkeit und Steifigkeit der Grundstrukturen zu erhalten, werden in aufwendiger Weise zuerst die Verstärkungsstrukturen, beispielsweise Streben, Platten, Scheiben oder Stangen, hergestellt und anschließend werden die Streben und Stangen mit der Grundstruktur verbunden, um die ausreichende Tragfähigkeit und Steifigkeit der Tragstruktur als Kombination aus Grundstruktur und wenigstens einer Verstärkungsstruktur zu erhalten. Außerdem können die Verstärkungsstrukturen nur mit einem großen Aufwand an unterschiedliche Geometrien von Grundstrukturen angepasst werden.

Aus der US 2014/0061974 A1 ist ein Verfahren zur Herstellung eines dreidimensionalen Objektes aus einem Verbundmaterial bekannt. Zwei oder mehr Materialien werden dabei gleichzeitig als ein Verbundmaterial extrudiert.

Die DE 10 2015 007 317 A1 zeigt ein Verfahren zur Verstärkung einer Grundstruktur mit wenigstens einer Verstärkungsstruktur. Die Verstärkungsstrukturen werden bereits in der erforderlichen Verbindungsposition hergestellt, jedoch ist die Anzahl G-Maschinen fertigungstechnisch nicht optimal auf die Anzahl der der Prozesseinheiten als PE-Maschinen abgestimmt. Dadurch fallen hohe Maschinenkosten je hergestellte Tragstruktur an. Die Herstellung der Tragstrukturen ist damit teuer.

Die DE 10 2014 006 706 A1 zeigt ein Verfahren zur Herstellung eines Fachwerkes.

In dem Artikel "Process choice and production layout", Management & Development Center, 11. April 2008, Seiten 1-16, 11-04-2008, Gefunden im Internet: RL:https://web.archive.org/web/20080411022735/ http://www.mdcegypt.com/Pages/Operation%20Management/Production%20 &%200peration%20Management/Facility%20Layout/Group%20Technology/ Process%20choice%20and%20production%20layout1.asp sind Möglichkeiten zur Auswahl bei Verfahren offenbart.

Die Aufgabe der vorliegenden Erfindung besteht deshalb darin, ein Verfahren und ein Maschinensystem zur Herstellung eines Hybridbauteils zur Verfügung zu stellen, bei dem die Tragstruktur mit einem geringen technischen und finanziellen Aufwand je Tragstruktur hergestellt werden kann.

Diese Aufgabe wird gelöst mit einem Verfahren gemäß Anspruch 1.

Die pro Zeiteinheit von nur einer G-Maschine zur Verfügung gestellten Grundstrukturen und die von nur einer PE-Maschine pro Zeiteinheit hergestellten Verstärkungsstrukturen für je eine Grundstruktur können dadurch optimal aneinander angepasst werden. Die pro Zeiteinheit von nur einer G-Maschine zur Verfügung gestellten Grundstrukturen weist einen wesentlichen Unterschied auf zu der von nur einer PE-Maschine pro Zeiteinheit hergestellten Verstärkungsstrukturen für je eine Grundstruktur auf, insbesondere ist der Unterschied größer als 20%, 30% oder 50%. Die Taktzahl der G-Maschine unterscheidet sich somit von der Taktzahl der PE-Maschine. Aufgrund der unterschiedlichen Anzahlen an G-Maschinen und PE-Maschinen in dem Maschinensystem kann dadurch insgesamt in dem Maschinensystem die Taktzahl der G-Maschine auf die Taktzahl der PE-Maschine angepasst werden. Die Taktzahl einer G-Maschine ist die pro Zeiteinheit von einer G-Maschine zur Verfügung gestellten Grundstrukturen und in analoger Weise ist die Taktzahl der PE-Maschine die pro Zeiteinheit hergestellten Verstärkungsstrukturen für je eine Grundstruktur. Die Summe der Taktzahlen der in dem Maschinensystem vorhandenen wenigstens einen G-Maschinen entspricht im Wesentlichen der Summe der Taktzahlen der vorhandenen wenigstens einen PE-Maschine. Dadurch ist das Maschinensystem in vorteilhafter Weise optimiert ausgelegt, da größere unnötige Wartezeiten der hergestellten Grundstrukturen vor der Weiterverarbeitung in der PE-Maschine vermieden werden können. Das Maschinensystem ist damit insgesamt bezüglich der pro Zeiteinheit hergestellten Tragstrukturen kostengünstig, sodass in vorteilhafter Weise die Tragstrukturen als Hybridbauteile kostengünstig hergestellt werden können. Die Kosten für die Herstellung der Tragstruktur als Hybridbauteil können außerdem dadurch wesentlich reduziert werden, da die wenigstens eine Verstärkungsstruktur bereits an derjenigen Verbindungspositionen hergestellt wird, an welcher die wenigstens eine Verstärkungsstruktur mit der Grundstruktur zu verbinden bzw. befestigen ist. Eine aufwendige nachträgliche Anordnung bereits hergestellter Verstärkungsstrukturen an den erforderlichen Verbindungspositionen ist dadurch in vorteilhafter Weise nicht mehr erforderlich. Das Hybridbauteil umfasst wenigstens eine Grundstruktur und wenigstens eine Verstärkungsstruktur und die Hybrideigenschaft des Hybridbauteils resultiert aus der unterschiedlichen Taktzahl mit der die wenigstens eine Grundstruktur von der G-Maschine zur Verfügung, insbesondere hergestellt, wird und die wenigstens eine Verstärkungsstruktur mit der PE-Maschine hergestellt wird, wobei die wenigstens eine Grundstruktur und die wenigstens eine Verstärkungsstruktur im Regelfall unterschiedliche strukturelle Eigenschaften aufweisen, beispielsweise aus einem unterschiedlichen Material bzw. Werkstoff ausgebildet sind, jedoch kann die wenigstens Grundstruktur und die wenigstens eine Verstärkungsstruktur vorzugsweise auch identische strukturelle Eigenschaften aufweisen.

In einer zusätzlichen Ausführungsform wird die Grundstruktur mit der wenigstens einen G-Maschine hergestellt und/oder eine Vielzahl an Grundstrukturen werden mit der wenigstens einen G-Maschine zur Verfügung gestellt und werden mit dem Fördersystem zu der wenigstens einen PE-Maschine transportiert und mit der wenigstens einen PE-Maschine werden die Verstärkungsstrukturen auf den Grundstrukturen hergestellt.

In einer ergänzenden Ausgestaltung wird die Grundstruktur mit der wenigstens einen G-Maschine mittels Additive Manufacturing, insbesondere 3D-Drucken, vorzugsweise 3D-Drucken als Pulverbettverfahren und/oder Freiraumverfahren und/oder Flüssigmaterialverfahren, hergestellt und/oder die Grundstruktur wird mit der wenigstens einen G-Maschine mittels Spritzgießen hergestellt und/oder die Grundstruktur wird mit der wenigstens einen G-Maschine zur Verfügung gestellt, indem die Grundstruktur aus einem Speicher, insbesondere Magazin, entnommen wird.

Zweckmäßig wird das 3D-Drucken als Pulverbettverfahren mittels selektives Laserschmelzen (SLM), selektiven Lasersintern (SLS), Selective Head Sintering (SHS), Binder Jetting und/oder Elektronenstrahlschmelzen ausgeführt und/oder das 3D-Drucken wird als Freiraumverfahren mittels Fused Deposition (FDM), Laminated Object Modelling (LOM), Auftragsschweißen bzw. Cladding, Wax Deposition Modeling (WDM), Contour Crafting, Kaltgasspritzen und/oder Elektronenstrahlschmelzen ausgeführt und/oder das 3D-Drucken wird als Flüssigmaterialverfahren mittels Stereolithografie (SLA), Digital Light Processing (DLP) oder Liquid Composite Moulding (LCM) ausgeführt.

In einer zusätzlichen Ausgestaltung wird bzw. werden die von der wenigstens einen G-Maschine zur Verfügung gestellte Grundstruktur, insbesondere Grundstrukturen, mit einem Fördersystem als Förderband und/oder Roboter zu der wenigstens einen PE-Maschine transportiert.

In einer weiteren Ausführungsform wird nach der Herstellung der wenigstens einen Verstärkungsstruktur auf der Grundstruktur die Grundstruktur mit der wenigstens einen Verstärkungsstruktur mit dem Fördersystem von der wenigstens einen PE-Maschine zu der wenigstens einen G-Maschine rücktransportiert und auf der bereits hergestellten Verstärkungsstruktur wird eine weitere Grundstruktur als zusätzliche Grundstruktur mit der wenigstens einen G-Maschine aufgebracht. Auf die weitere Grundstruktur als zusätzliche Grundstruktur kann in einem ergänzenden Herstellungsschritt von der PE-Maschine wenigstens eine weitere zusätzliche Verstärkungsstruktur aufgebracht werden bzw. auf der zusätzlichen Grundstruktur hergestellt werden und hierzu werden die miteinander verbundenen zwei Grundstrukturen mit der Verstärkungsstruktur von der G-Maschine wieder rücktransportiert zu der PE-Maschine. Diese Vorgänge können außerdem beliebig oft wiederholt werden, sodass dadurch die Tragstruktur als das Hybridbauteil eine beliebige Anzahl an Grundstrukturen und Verstärkungsstrukturen für je eine Grundstruktur aufweisen kann.

In einer ergänzenden Ausgestaltung sind die pro Zeiteinheit von nur einer G-Maschine zur Verfügung gestellten Grundstrukturen kleiner als die von nur einer PE-Maschine pro Zeiteinheit hergestellten Verstärkungsstrukturen für je eine Grundstruktur und in dem Maschinensystem ist die Anzahl der wenigstens einen G-Maschine größer als die Anzahl der wenigstens einen PE-Maschine, insbesondere das Maschinensystem über nur eine PE-Maschine verfügt oder die pro Zeiteinheit von nur einer G-Maschine zur Verfügung gestellten Grundstrukturen sind größer als die von nur einer PE-Maschine pro Zeiteinheit hergestellten Verstärkungsstrukturen für je eine Grundstruktur und in dem Maschinensystem ist die Anzahl der wenigstens einen PE-Maschine größer als die Anzahl der wenigstens einen G-Maschine, insbesondere das Maschinensystem über nur eine G-Maschine verfügt.

Zweckmäßig werden mit der G-Maschine unterschiedliche Grundstrukturen hergestellt und/oder mit der PE-Maschine werden unterschiedliche Verstärkungsstrukturen hergestellt und/oder das Verfahren wird mit einem in dieser Schutzrechtsanmeldung beschriebenen Maschinensystem ausgeführt. Die unterschiedlichen Grundstrukturen, welche von der G-Maschine hergestellt werden, weisen insbesondere eine unterschiedliche Geometrie und/oder Form auf. Diese unterschiedlichen Geometrien und/oder Formen sind einer Recheneinheit des Maschinensystems bekannt und aufgrund dieser unterschiedlicher Geometrien und/oder Formen der Grundstruktur wird entsprechend wenigstens eine unterschiedliche Verstärkungsstruktur für je eine Grundstruktur mittels der PE-Maschine auf die Grundstruktur aufgebracht bzw. hergestellt. Die unterschiedlichen Verstärkungsstrukturen weisen somit auch eine unterschiedliche Form und/oder Geometrie auf. Damit können mit dem Verfahren in vorteilhafter Weise auch unterschiedliche Tragstrukturen bzw. unterschiedliche Hybridbauteile in vorteilhafter Weise mit dem Maschinensystem hergestellt werden, indem lediglich die G-Maschine und die PE-Maschine von einer Recheneinheit entsprechend unterschiedlich gesteuert werden.

In einer weiteren Ausführungsform wird bzw. werden mit der pultrudierten und/oder extrudierten wenigstens einen Verstärkungsstruktur, insbesondere sämtlichen Verstärkungsstrukturen, nach dem Pultrudieren und/oder Extrudieren und dem Auflegen auf die Grundstruktur keine Bewegung relativ zu der Grundstruktur ausgeführt und/oder die Matrix der pultrudierten und/oder extrudierten Verstärkungsstruktur, insbesondere sämtliche Verstärkungsstrukturen, an der erforderlichen Verbindungsposition an und/oder auf der Grundstruktur erhärtet und/oder die Pultrusion und Extrusion gleichzeitig und/oder kontinuierlich ausgeführt wird.

In einer weiteren Ausgestaltung wird für die Herstellung der wenigstens einen Verstärkungsstruktur als erster Schritt das Pultrudieren ausgeführt und als zweiter Schritt wird das Extrudieren ausgeführt, so dass die in dem ersten Schritt teilweise hergestellte pultrudierte wenigstens eine Verstärkungsstruktur, insbesondere sämtliche Verstärkungsstrukturen, in dem zweiten Schritt mit Extrudieren nachbearbeitet wird bzw. werden und/oder die wenigstens eine Verstärkungsstruktur, vorzugsweise sämtliche Verstärkungsstrukturen, insbesondere kontinuierlich, hergestellt wird bzw. werden, indem die Pultrusionseinheit und/oder Extrusionseinheit, insbesondere kontinuierlich, im Raum in einer Bewegungsbahn bewegt wird an und/oder im Bereich der erforderlichen Verbindungsposition in einem Abstand zu der Grundstruktur. Der Abstand ist gering im Bereich weniger mm oder cm. Die Pultrusionseinheit und/oder Extrusionseinheit wird im Wesentlichen an der erforderlichen Verbindungsposition bewegt, da nach dem Austreten der wenigstens einen Verstärkungsstruktur aus der Prozesseinheit die Verstärkungsstruktur noch einen geringen Abstand zu der Grundstruktur aufweist.

Zweckmäßig wird die wenigstens eine Verstärkungsstruktur als ein gerader oder gekrümmter Stab hergestellt und/oder die Bewegungsbahn im Wesentlichen eine Gerade und/oder, vorzugsweise gekrümmte, Linie ist und/oder die Pultrusionseinheit und/oder Extrusionseinheit mit einem Roboter bewegt wird und/oder nach dem Pultrudieren und/oder Extrudieren je einer Verstärkungsstruktur mit einer Schneideeinheit das Verbundmaterial mit den Fasen und der Matrix abgetrennt wird und/oder die wenigstens eine Verstärkungsstruktur als der Stab in seiner Länge zu mehr als 50%, 70%, 80% oder 90% an der Außenseite mit der Grundstruktur verbunden wird.

In einer ergänzenden Variante wird je wenigstens eine Verstärkungsstruktur hergestellt deren Länge wenigstens um das 2-, 4-, 5-, 10- oder 20-Fache größer ist als der Durchmesser dieser Verstärkungsstruktur und/oder die Querschnittsform der wenigstens einen Verstärkungsstruktur, insbesondere sämtlicher Verstärkungsstrukturen, beim Extrudieren und/oder beim Auflegen auf die Grundstruktur ausgebildet wird bzw. werden und/oder die Länge der Verstärkungsstruktur, insbesondere sämtlicher Verstärkungsstrukturen, durch die Länge der Bewegungsbahn der Pultrusionseinheit und/oder Extrusionseinheit ausgebildet wird bzw. werden und/oder die wenigstens eine Verstärkungsstruktur, insbesondere sämtliche Verstärkungsstrukturen, ohne einem Hohlraum und/oder ohne einem Hohlkanal hergestellt werden. Beim Auflegen der wenigstens einen Verstärkungsstruktur auf die Grundstruktur ist das Verbundmaterial nicht vollständig abgekühlt und damit verformbar, so dass das Verbundmaterial an die Geometrie der Grundstruktur durch Verformen angepasst wird.

In einer ergänzenden Ausgestaltung werden die Fasern und vorzugsweise die Matrix kontinuierlich zuerst durch die Pultrusionseinheit und anschließend durch die Extrusionseinheit gefördert und/oder Hybridgarne mit Fasern und Matrix werden zu der Pultrusionseinheit gefördert oder die Fasern und die Matrix werden getrennt zu der Pultrusionseinheit gefördert und/oder die Fasern oder die Hybridgarne von Rollen abgewickelt und zu der Pultrusionseinheit gefördert werden und/oder die wenigstens eine Verstärkungsstruktur, insbesondere sämtliche Verstärkungsstrukturen, herstellt wird bzw. werden, so dass wenigstens eine Faser, vorzugsweise mehrere Fasern, an einer Außenseite der wenigstens einen Verstärkungsstruktur, insbesondere sämtlicher Verstärkungsstrukturen, angeordnet ist bzw. sind und/oder die wenigstens eine Verstärkungsstruktur, insbesondere sämtliche Verstärkungsstrukturen, herstellt wird bzw. werden, so dass wenigstens eine Faser, vorzugsweise mehrere Fasern, keine vollständige Umhüllung mit der Matrix aufweist bzw. aufweisen und/oder die wenigstens eine Verstärkungsstruktur, insbesondere sämtliche Verstärkungsstrukturen, herstellt wird bzw. werden, so dass zwischen den Fasern die Matrix angeordnet ist. In den Verstärkungsstrukturen sind die Fasern mittels der Matrix stoffschlüssig miteinander fest verbunden, da die Matrix erhärtet ist. Die Fasern sind dabei auch an der Außenseite der wenigstens einen Verstärkungsstruktur angeordnet, so dass an der Außenseite der wenigstens einen Verstärkungsstruktur die Fasern sichtbar bzw. greifbar sind. Insbesondere sind somit nicht in einem inneren Bereich der Verstärkungsstrukturen die Fasern angeordnet und in einer äußeren Hülle die Matrix. Vielmehr sind die Fasern und die Matrix auf die Querschnittsform verteilt und zwischen den Fasern ist auch die Matrix angeordnet. Vorzugsweise umfasst dabei eine Verstärkungsstruktur, insbesondere Stab, beispielsweise wenigstens zwei, drei, fünf oder zehn Fasern.

In einer zusätzlichen Ausführungsform werden in der Pultrusionseinheit während der Pultrusion mittels der Matrix die Fasern stoffschlüssig miteinander verbunden, insbesondere indem die Matrix erwärmt und/oder erhärtet wird und/oder die Matrix während des Fördern von der Pultrusionseinheit zu der Extrusionseinheit abgekühlt und/oder erhärtet wird, so dass dadurch die Fasern stoffschlüssig miteinander verbunden werden und/oder mittels einer Fördereinrichtung, beispielsweise zwei Förderrädern, die Fasern und die Matrix gefördert werden, insbesondere indem die Fördereinrichtung auf die Fasern mit der Matrix während des Fördern der Fasern mit der Matrix von der Pultrusionseinheit zu der Extrusionseinheit auf die Fasern mit der Matrix einwirkt und/oder die Fasern und die Matrix mittels Pultrusion zuerst stoffschlüssig, insbesondere mittels Erwärmen und/oder Erhärten der Matrix, miteinander verbunden werden und anschließend beim Extrudieren in der Extrusionseinheit wenigstens teilweise die Querschnittsform der wenigstens einen Verstärkungsstruktur ausgeformt wird und/oder die wenigstens eine Verstärkungsstruktur, insbesondere sämtliche Verstärkungsstrukturen, mit einem maximalen Durchmesser zwischen 1 mm und 30 mm, insbesondere zwischen 2 mm und 20 mm, extrudiert wird bzw. werden.

In einer zusätzlichen Ausgestaltung werden in der Extrusionseinheit die Fasern mit der Matrix erwärmt und/oder in der Extrusionseinheit die Querschnittsform, vorzugsweise kreisförmig, ellipsenförmig oder rechteckig, der wenigstens einen Verstärkungsstruktur ausgeformt wird während des Extrudierens und vorzugsweise aufgrund des Kontaktes der wenigstens einen Verstärkungsstruktur mit der Oberfläche der Grundstruktur die Querschnittsform nochmals ausgeformt wird und/oder in der Pultrusionseinheit die Fasern mit der Matrix zuerst erwärmt werden, während des Förderns der Fasern mit der Matrix von der Pultrusionseinheit zu der Extrusionseinheit die Fasern abkühlen und in der Extrusionseinheit der Fasern mit der Matrix nochmals erwärmt werden und/oder die Fasern mit der Matrix in der Pultrusionseinheit mit einer, vorzugsweise ersten, Kühleinrichtung, aktiv gekühlt werden und/oder die Fasern mit der Matrix nach dem Fördern durch die Extrusionseinheit mit einer, vorzugsweise zweiten, Kühleinrichtung, beispielsweise einem Gebläse, aktiv gekühlt werden und/oder die wenigstens eine Verstärkungsstruktur, insbesondere sämtliche Verstärkungsstrukturen, bezüglich der Länge der jeweiligen Verstärkungsstruktur zu mehr als 70%, 80% oder 90% mit der Grundstruktur verbunden sind, so dass die Länge der Verbindung zwischen der Verstärkungsstruktur und der Grundstruktur größer ist als 70%, 80% oder 90% der Länge der Verstärkungsstruktur.

In einer weiteren Ausgestaltung wird bzw. werden die wenigstens eine Verstärkungsstruktur, insbesondere sämtliche Verstärkungsstrukturen, mit Kunststoff, vorzugsweise thermoplastischen und/oder duroplastischen Kunststoff und/oder Kunststoff als reaktiver Hotmelt bzw. reaktiver Schmelzklebstoff bzw. reaktiver Schmelzpolymer, als Matrix hergestellt und/oder die wenigstens eine Verstärkungsstruktur, insbesondere sämtliche Verstärkungsstrukturen, mit Fasern als Glasfasern, Karbonfasern und/oder Aramidfasern, hergestellt wird bzw. werden und/oder die wenigstens eine Verstärkungsstruktur, insbesondere sämtliche Verstärkungsstrukturen, ausschließlich aus Matrix und Fasern hergestellt wird bzw. werden und/oder die wenigstens eine Verstärkungsstruktur, insbesondere sämtliche Verstärkungsstrukturen, hergestellt wird bzw. werden, so dass der Massenanteil oder Volumenanteil der Fasern wenigstens 30%, 40%, 60% oder 80% beträgt und/oder die wenigstens eine Verstärkungsstruktur, insbesondere sämtliche Verstärkungsstrukturen, hergestellt wird bzw. werden, so dass der Massenanteil oder Volumenanteil der Matrix weniger als 70%, 60%, 40% oder 20% beträgt und/oder die wenigstens eine Verstärkungsstruktur, insbesondere sämtliche Verstärkungsstrukturen, hergestellt wird bzw. werden, so dass die wenigstens eine Verstärkungsstruktur ausschließlich aus den Fasern und der Matrix ausgebildet ist bzw. sind. Kunststoffe als reaktiver Hotmelt bzw. reaktiver Schmelzklebstoff bzw. reaktiver Schmelzpolymer sind Kunststoffe die, vorzugsweise zunächst thermoplastische Eigenschaften aufweisen und/oder ein thermoplastischer Kunststoff sind, und nach wenigstens einem Veränderungsparameter, beispielsweise das Erwärmen bzw. Erhitzen und/oder das Aussetzten an Feuchtigkeit und/oder der Bestrahlung mit UV-Licht und/oder einem Sauerstoffentzug, durch eine chemische Veränderung, insbesondere wenigstens eine chemische Reaktion, duroplastische Eigenschaften aufweisen und/oder ein duroplastischer Kunststoff sind. Bei einem Veränderungsparameter des Erwärmens bzw. Erhitzens kann das Erwärmen und/oder Erhitzen in der Pultrusionseinheit und/oder Extrusionseinheit als Veränderungsparameter genutzt werden und nach dem anschließenden Abkühlen und Erhärten der Matrix auf der Grundstruktur weist die Tragstruktur, insbesondere die Verstärkungsstruktur, auch bei einem Erwärmen oder Erhitzen eine ausreichende Tragfähigkeit und/oder Steifigkeit auf. Duroplastische Kunststoffe sind auch bei einem Erwärmen bzw. Erhitzen zu 100% ein Festkörper, d. h. das Erhärten ist nicht durch Erwärmen umkehrbar. Das Erwärmen und/oder Erhitzen in der Pultrusionseinheit und/oder Extrusionseinheit wird beispielsweise auf Temperaturen zwischen 60°C und 200° C ausgeführt. Bei einem reaktiven Hotmelt beispielsweise auf Basis von Polymeren wird die chemische Veränderung durch eine Verbindung zwischen bestehenden Makromolekularketten (sog. Cross links) ausgeführt. Reaktive Hotmelts sind beispielsweise auf Basis von EVA (Ethylen-Vinyl-Acetat) und Polyester oder auf Basis von PA (Polyamid) oder auf Basis von Polymeren oder auf Basis von PUR aufgebaut. Reaktive Hotmelts können auch teilweise Stoffe aufweisen, die keine Kunststoffe bzw. Klebstoffe sind. Klebstoffe werden insofern auch als Kunststoffe betrachtet. Wesentliche Eigenschaft des reaktiven Hotmelts bzw. reaktiven Schmelzklebstoffes bzw. reaktiven Schmelzpolymers ist somit, dass nach dem Erhärten aufgrund des Einwirkens des wenigstens einen Veränderungsparameters ein Erwärmen der wenigstens einen Verstärkungsstruktur kein Schmelzen des reaktiven Hotmelts bzw. der Matrix aus dem reaktiven Hotmelt bewirkt, so dass trotz des Erwärmens auf für die Anwendung normale Temperaturen, beispielsweise auf Temperaturen bis 200° C oder 300° C, die Tragfähigkeit und/oder Steifigkeit der Tragstruktur weiterhin gewährleistet ist.

In einer weiteren Ausgestaltung wird bzw. werden die wenigstens eine Verstärkungsstruktur, insbesondere sämtliche Verstärkungsstrukturen, hergestellt, so dass die Länge der Fasern, insbesondere sämtlicher Fasern, in je einer Verstärkungsstruktur im Wesentlichen der Länge der wenigstens einen Verstärkungsstruktur entspricht und/oder die wenigstens eine Verstärkungsstruktur, insbesondere sämtliche Verstärkungsstrukturen, auf der Oberfläche der Grundstruktur abkühlen und erhärten. Im Wesentlichen bedeutet dabei, dass die Länge der Verstärkungsstruktur mit einer Abweichung von weniger als 30%, 20%, 10% oder 5% der Länge der Fasern in der jeweiligen Verstärkungsstruktur entspricht.

In einer weiteren Ausführungsform wird vor dem Auflegen der wenigstens einen Verstärkungsstruktur auf die Oberfläche der Grundstruktur an der Oberfläche der Grundstruktur lokal im Bereich einer späteren Kontaktfläche zwischen der wenigstens einen Verstärkungsstruktur und der Grundstruktur der Werkstoff der Grundstruktur abgetragen.

Vorzugsweise wird die Grundstruktur spanabhebend abgetragen, insbesondere mit einem Werkzeug, vorzugsweise Fräswerkzeug, und das Werkzeug wird von einem Roboter entlang der Oberfläche der Grundstruktur bewegt.

In einer zusätzlichen Variante wird in die Grundstruktur aufgrund des Abtragens des Werkstoffes der Grundstruktur eine, vorzugsweise längliche, Aussparung eingearbeitet und in die Aussparung wird anschließend die wenigstens eine Verstärkungsstruktur eingeführt, so dass eine formschlüssige Verbindung zwischen der wenigstens einen Verstärkungsstruktur und der Grundstruktur an der Aussparung, insbesondere nach dem Abkühlen und Erhärten der Matrix, ausgebildet wird. Die Aussparungen können beispielsweise beim Herstellen der Grundstrukturen mit einem 3D-Drucker bereits beim Herstellen mit dem 3D-Drucker durch eine entsprechende Steuerung des 3D-Druckers mit einer Recheneinheit mit herstellt werden.

In einer ergänzenden Ausgestaltung wird vor dem Auflegen der wenigstens einen Verstärkungsstruktur auf die Oberfläche der Grundstruktur die Oberfläche der Grundstruktur lokal im Bereich einer späteren Kontaktfläche zwischen der wenigstens einen Verstärkungsstruktur und der Grundstruktur mit einer Grundstrukturheizeinrichtung, insbesondere einem Laser oder einem Infrarotstrahler, erwärmt.

In einer weiteren Ausführungsform wird die Grundstrukturheizeinrichtung von einem Roboter entlang der Oberfläche der Grundstruktur bewegt und/oder aufgrund des Erwärmens der Oberfläche der Grundstruktur wird lokal im Bereich einer späteren Kontaktfläche zwischen der wenigstens einen Verstärkungsstruktur und der Grundstruktur der Werkstoff der Grundstruktur seine Eigenschaft verändert, insbesondere zähfließend und/oder klebrig und/oder flüssig, so dass eine stoffschlüssige Verbindung zwischen der Matrix der wenigstens einen Verstärkungsstruktur und dem Werkstoff der Grundstruktur, insbesondere nach dem Abkühlen, ausgebildet wird.

In einer ergänzenden Ausgestaltung wird vor dem Auflegen der wenigstens einen Verstärkungsstruktur auf die Oberfläche der Grundstruktur lokal im Bereich einer späteren Kontaktfläche zwischen der wenigstens einen Verstärkungsstruktur und der Grundstruktur mit einer Zugabevorrichtung ein Stoff, insbesondere ein Klebstoff und/oder ein Haftvermittler, zur Verbesserung der Verbindung zwischen der wenigstens einen Verstärkungsstruktur und der Grundstruktur aufgebracht.

Vorzugsweise wird die Zugabevorrichtung von einem Roboter entlang der Oberfläche der Grundstruktur bewegt.

In einer ergänzenden Ausgestaltung wird zuerst die Grundstruktur hergestellt oder zur Verfügung gestellt und anschließend wird die wenigstens eine Verstärkungsstruktur hergestellt.

Zweckmäßig wird die Grundstruktur mit einem anderen Verfahren hergestellt als die wenigstens eine Verstärkungsstruktur.

Ein erfindungsgemäßes Maschinensystem ist gemäß Anspruch 12 ausgeführt.

Die Anzahl der wenigstens einen G-Maschine und die Anzahl der wenigstens einen PE-Maschine ist an die Taktzahl aus der Summe der wenigstens einen G-Maschine und der Summe der wenigstens einen PE-Maschine dahingehend angepasst, dass die Summe der Taktzahlen der wenigstens G-Maschine im Wesentlichen, das heißt mit einer Abweichung von weniger als 60 %, 50 %, 40 %, 30 %, 20 % oder 10 %, der Summe der Taktzahlen der wenigstens einen PE-Maschine entspricht. Die wenigstens eine G-Maschine und die wenigstens eine PE-Maschine ist damit im Betrieb des Maschinensystems zur Herstellung der Tragstruktur als das Hybridbauteil im Wesentlichen ständig ausgelastet. Dadurch weist das Maschinensystem geringe Kosten zur Herstellung je einer Tragstruktur auf.

In einer ergänzenden Ausgestaltung ist die G-Maschine ein 3D-Drucker und/oder eine Spritzgussmaschine und/oder ein Speicher für die Grundstrukturen und/oder das Fördersystem ist ein Förderband und/oder ein Roboter.

In einer zusätzlichen Variante umfasst das Maschinensystem einen Roboter zum Bewegen der PE-Maschine in einer Bewegungsbahn im Raum und die PE-Maschine an dem Roboter befestigst ist, so dass die wenigstens eine Verstärkungsstruktur in der erforderlichen Verbindungsposition auf der wenigstens einen Grundstruktur herstellbar ist.

Zweckmäßig ist das Maschinensystem dahingehend ausgebildet, dass die pro Zeiteinheit von nur einer G-Maschine zur Verfügung gestellten Grundstrukturen kleiner sind als von nur einer PE-Maschine pro Zeiteinheit hergestellten Verstärkungsstrukturen für je eine Grundstruktur und in dem Maschinensystem die Anzahl der wenigstens einen G-Maschine größer ist als die Anzahl der wenigstens einen PE-Maschine, insbesondere das Maschinensystem über nur eine PE-Maschine verfügt oder das Maschinensystem ist dahingehend ausgebildet, dass die pro Zeiteinheit von nur einer G-Maschine zur Verfügung gestellten Grundstrukturen größer sind als von nur einer PE-Maschine pro Zeiteinheit hergestellten Verstärkungsstrukturen für je eine Grundstruktur und in dem Maschinensystem die Anzahl der wenigstens einen PE-Maschine größer ist als die Anzahl der wenigstens einen G-Maschine, insbesondere das Maschinensystem über nur eine G-Maschine verfügt.

Zweckmäßig ist die Grundstruktur aus Metall, insbesondere Stahl und/oder Aluminium, und/oder aus Kunststoff, insbesondere faserverstärkten Kunststoff, und/oder in Sandwichbauweise aus zwei unterschiedlichen Materialien ausgebildet.

In einer weiteren Variante ist die Grundstruktur als ein flächiges Bauteil, eine Platte, eine Scheibe, eine Teilkugelschale, eine Kuppel, ein Rotationsteilellipsoid, eine Wanne oder ein Becher ausgebildet.

In einer zusätzlichen Ausgestaltung ist die Grundstruktur und/oder die Tragstruktur ein tragendes Bauteil, beispielsweise ein Träger, eine Stütze, eine Strebe, ein Flansch, eine Kuppel, eine Platte, eine Scheibe, eine Teilkugelschale, eine Schuhsohle, ein Teller, eine Tischplatte, eine Wandung oder eine Decke, für verschiedenste Anwendungen, insbesondere im Alltagsleben, Maschinenbau, Bauwesen oder Elektrotechnik.

In einer ergänzenden Ausführungsform wird die wenigstens eine Verstärkungsstruktur mit einer ebenen und/oder gekrümmten Oberfläche der Grundstruktur verbunden, vorzugsweise indem die wenigstens eine Verstärkungsstruktur mittels Extrusion und/oder Pultrusion an und/oder auf der ebenen und/oder gekrümmten Oberfläche der Grundstruktur hergestellt wird.

In einer zweckmäßigen Ausgestaltung ist die wenigstens eine Verstärkungsstruktur, vorzugsweise sämtliche Verstärkungsstrukturen, mit Kunststoff, vorzugsweise thermoplastischen Kunststoff und/oder duroplastischen Kunststoff und/oder Kunststoff als reaktiver Hotmelt bzw. reaktiver Schmelzklebstoff bzw. reaktiver Schmelzpolymer, als Matrix ausgebildet und/oder die wenigstens eine Verstärkungsstruktur, vorzugsweise sämtliche Verstärkungsstrukturen, sind mit Fasern als Glasfasern, Karbonfasern und/oder Aramidfasern, ausgebildet und/oder die wenigstens eine Verstärkungsstruktur, vorzugsweise sämtliche Verstärkungsstrukturen, ist bzw. sind ausschließlich aus Fasern und Matrix ausgebildet und/oder der Massenanteil oder Volumenanteil der Fasern an der wenigstens eine Verstärkungsstruktur, vorzugsweise sämtliche Verstärkungsstrukturen, beträgt wenigstens 30%, 40%, 60% oder 80% und/oder der Massenanteil oder Volumenanteil der Matrix an der wenigstens einen Verstärkungsstruktur, vorzugsweise sämtlichen Verstärkungsstrukturen, beträgt weniger als 70%, 60%, 40% oder 20% und/oder die wenigstens eine Verstärkungsstruktur, vorzugsweise sämtliche Verstärkungsstrukturen, sind ausschließlich aus den Fasern und der Matrix ausgebildet und/oder die wenigstens eine Verstärkungsstruktur, vorzugsweise sämtliche Verstärkungsstrukturen, sind gerade und/oder gekrümmt ausgebildet und/oder die Länge der wenigstens eine Verstärkungsstruktur, vorzugsweise sämtliche Verstärkungsstrukturen, ist wenigstens um das 2-, 4-, 5-, 10- oder 20-Fache größer als der Durchmesser der wenigstens eine Verstärkungsstruktur, vorzugsweise sämtliche Verstärkungsstrukturen, und/oder die wenigstens eine Verstärkungsstruktur, vorzugsweise sämtliche Verstärkungsstrukturen, sind ohne Hohlraum ausgebildet und/oder an der wenigstens eine Verstärkungsstruktur, vorzugsweise sämtliche Verstärkungsstrukturen, ist an der Außenseite wenigstens eine Faser angeordnet bzw. sind vorzugsweise mehrere Fasern angeordnet, so dass vorzugsweise die wenigstens eine Faser, vorzugsweise die mehreren Fasern, an der Außenseite der wenigstens einen Verstärkungsstruktur, vorzugsweise sämtliche Verstärkungsstrukturen, sichtbar und/oder greifbar ist bzw. sind und/oder wenigstens eine Faser, vorzugsweise mehrere Fasern, an der wenigstens eine Verstärkungsstruktur, vorzugsweise sämtliche Verstärkungsstrukturen, keine vollständige Umhüllung mit der Matrix aufweist bzw. aufweisen und/oder die Fasern sind mit zwischen den Fasern angeordneter Matrix stoffschlüssig miteinander verbunden.

Die Erfindung umfasst ferner ein Computerprogramm mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

Bestandteil der Erfindung ist außerdem ein Computerprogrammprodukt mit Programmcodemitteln, die auf einem computerlesbaren Datenträger gespeichert sind, um ein in dieser Schutzrechtsanmeldung beschriebenes Verfahren durchzuführen, wenn das Computerprogramm auf einem Computer oder einer entsprechenden Recheneinheit durchgeführt wird.

Im Nachfolgenden werden Ausführungsbeispiele der Erfindung unter Bezugnahme auf die beigefügten Zeichnungen näher beschrieben.

Es zeigt:
- Fig. 1: einen vereinfachten Längsschnitt einer Prozesseinheit als PE-Maschine mit einer Pultrusionseinheit und Extrusionseinheit zur Durchführung des Verfahrens,
- Fig. 2: eine Seitenansicht der Prozesseinheit während der Durchführung des Verfahrens,
- Fig. 3: einen Querschnitt einer Grundstruktur vor dem Aufbringen einer Verstärkungsstruktur,
- Fig. 4: den Querschnitt der Grundstruktur gemäß Fig. 3 nach dem Aufbringen der Verstärkungsstruktur,
- Fig. 5: einen Querschnitt von Grundstrukturen und Verstärkungsstrukturen in einem ersten Ausführungsbeispiel,
- Fig. 6: den Querschnitt von Grundstrukturen und Verstärkungsstrukturen in einem zweiten Ausführungsbeispiel,
- Fig. 7: eine Draufsicht auf eine Grundstruktur und Verstärkungsstrukturen in einem dritten Ausführungsbeispiel,
- Fig. 8: eine perspektivische Ansicht der Grundstruktur mit Verstärkungsstrukturen gemäß Fig. 7,
- Fig. 9: eine Draufsicht auf eine Grundstruktur und Verstärkungsstrukturen in einem vierten Ausführungsbeispiel,
- Fig. 10: eine perspektivische Ansicht der Grundstruktur mit Verstärkungsstrukturen gemäß Fig. 9,
- Fig. 11: eine Draufsicht auf eine Grundstruktur und Verstärkungsstrukturen in einem fünften Ausführungsbeispiel,
- Fig. 12: eine perspektivische Ansicht der Grundstruktur mit Verstärkungsstrukturen gemäß Fig. 11,
- Fig. 13: eine Seitenansicht auf eine Grundstruktur und Verstärkungsstrukturen in einem sechsten Ausführungsbeispiel,
- Fig. 14: eine perspektivische Ansicht der Grundstruktur mit Verstärkungsstrukturen gemäß Fig. 13,
- Fig. 15: eine perspektivische Ansicht auf eine Grundstruktur in einem siebten Ausführungsbeispiel,
- Fig. 16: eine perspektivische Ansicht auf eine Grundstruktur mit Verstärkungsstruktur gemäß Fig. 15,
- Fig. 17: eine perspektivische Ansicht auf eine Grundstruktur mit Verstärkungsstruktur und einer zusätzlichen Grundstruktur gemäß Fig. 15,
- Fig. 18: eine perspektivische Ansicht auf eine Grundstruktur mit Verstärkungsstruktur und einer zusätzlichen Grundstruktur und einer zusätzlichen Verstärkungsstruktur gemäß Fig. 15,
- Fig. 19: eine stark vereinfachte Darstellung eines Maschinensystems in einem ersten Ausführungsbeispiel und
- Fig. 20: eine stark vereinfachte Darstellung eines Maschinensystems in einem zweiten Ausführungsbeispiel.

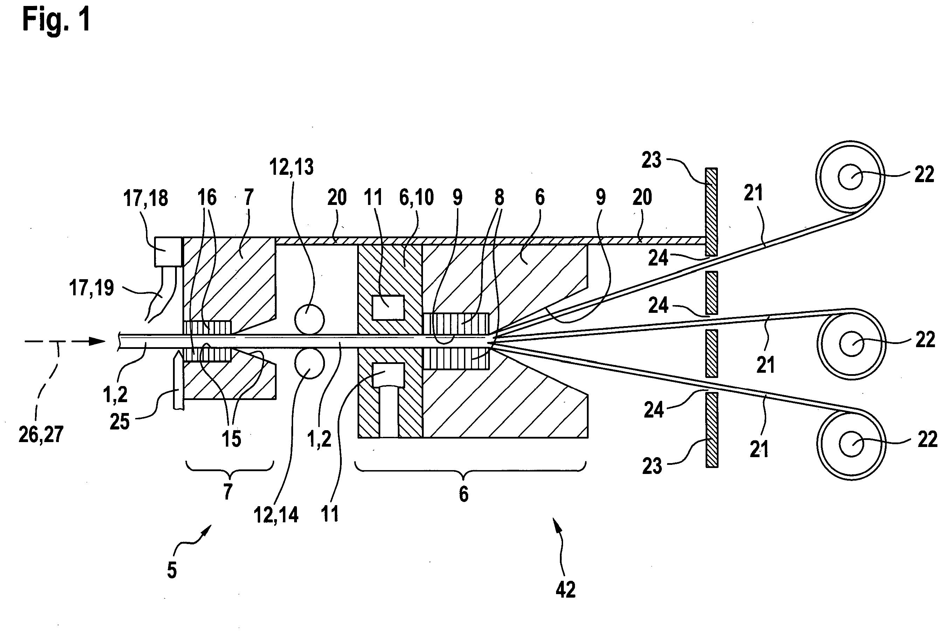

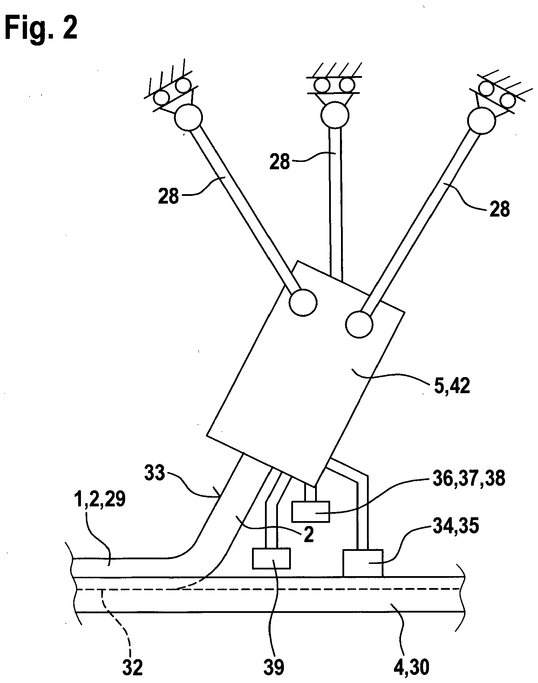

In Fig. 1 und 2 ist eine Prozesseinheit 5 zur Herstellung einer Verstärkungsstruktur 1 dargestellt. Die Prozesseinheit 5 umfasst eine Pultrusionseinheit 6 und eine Extrusionseinheit 7 und bildet eine PE-Maschine 42. In der Pultrusionseinheit 6 ist ein Pultrusionskanal 9 ausgebildet und in einer Richtung von rechts nach links gemäß der Darstellung in Fig. 1 weist der Pultrusionskanal 9 zunächst einen konisch sich verjüngenden Abschnitt und anschließend einen Abschnitt mit einem konstanten Durchmesser auf. An dem Pultrusionskanal 9 in dem Abschnitt mit dem konstanten Durchmesser ist in einer Richtung gemäß der Darstellung in Fig. 1 von rechts nach links sowie in einer Förderrichtung von Hybridgarnen 21 bzw. der herzustellenden bzw. hergestellten Verstärkungsstruktur 1 zuerst eine erste Heizeinrichtung 8 angeordnet und anschließend eine erste Kühleinrichtung 10. An der ersten Kühleinrichtung 10 ist ein Kühlkanal 11 ausgebildet, durch den ein Kühlfluid durchgeleitet wird zur Kühlung der teilweise hergestellten Verstärkungsstruktur 1. Die Extrusionseinheit 7 umfasst einen Extrusionskanal 15 und der Extrusionskanal 15 umfasst einen ersten sich konisch verjüngenden Abschnitt und einen zweiten Abschnitt mit einem konstanten Durchmesser. An dem zweiten Abschnitt des Extrusionskanales 15 mit dem konstanten Durchmesser ist eine zweite Heizeinrichtung 16 ausgebildet. Die erste und zweite Heizeinrichtung 8, 16 ist vorzugsweise als eine elektrische Widerstandsheizung ausgebildet. In der Förderrichtung der herzustellenden Verstärkungsstruktur 1 durch den Extrusionskanal 15 ist zuerst der konisch sich verjüngende Abschnitt des Extrusionskanales 15 und anschließend der Abschnitt des Extrusionskanales 15 mit dem konstanten Durchmesser ausgebildet. Zwischen der Pultrusionseinheit 6 und der Extrusionseinheit 7 ist eine Fördereinrichtung 12 ausgebildet. Die Fördereinrichtung 12 umfasst ein erstes Förderrad 13 und ein zweites Förderrad 14, welche von einem nicht dargestellten Elektromotor angetrieben werden. Die teilweise hergestellte Verstärkungsstruktur 1 ist zwischen den beiden Förderräden 13, 14 angeordnet, so dass die teilweise hergestellte Verstärkungsstruktur 1 mit der Fördereinrichtung 12 aus der Pultrusionseinheit 6 herausgezogen wird und mit der Fördereinrichtung 12 in die Extrusionseinheit 7 eingeschoben wird.

Die Pultrusionseinheit 6 und die Extrusionseinheit 7 sind mit einem Verbindungsteil 20, beispielsweise einem in Fig. 1 nur teilweise dargestellten Gehäuse, miteinander verbunden. An dem Verbindungsteil 20 ist ferner ein Zuführungsteil 23 mit drei Führungsbohrungen 24 befestigt. Auf drei Rollen 22 ist jeweils ein Hybridgarn 21 aufgerollt. Das Hybridgarn 21 besteht aus einer Faser als Glasfaser und weist ferner die Matrix aus einem thermoplastischen Kunststoff auf. Die Matrix als dem thermoplastischen Kunststoff ist dabei in dem Hybridgarn 21 als eine faserförmige Matrix bzw. als eine Matrixfaser angeordnet. Das Hybridgarn 21 ist biegbar und kann somit von der Rolle 22 abgerollt werden. An der Extrusionseinheit 7 ist ferner eine zweite Kühleinheit 17 befestigt. Die zweite Kühleinheit 17 umfasst ein Gebläse 18 und ein Kühlrohr 19. Mittels des Gebläses 18 wird Umgebungsluft durch das Kühlrohr 19 geleitet, gezielt zu dem Bereich der Verstärkungsstruktur 1 unmittelbar nach dem Verlassen der Extrusionseinheit 7. Eine Schneideeinheit 25 dient dazu, die an der Extrusionseinheit 7 extrudierte Verstärkungsstruktur 1 soweit erforderlich abzuschneiden und dadurch ein Ende der Verstärkungsstruktur 1 herstellen zu können.

Während der Herstellung der Verstärkungsstruktur 1 aus dem Verbundmaterial 29 mit den Fasern und der Matrix wird das Verbundmaterial 29 gemäß der Darstellung in Fig. 1 zuerst durch die Pultrusionseinheit 6 und anschließend durch die Extrusionseinheit 7 mittels der Fördereinrichtung 12 gefördert, jedoch erfolgen beide Vorgänge aufgrund der Länge der Stäbe 2 und Abstandes zwischen der Pultrusionseinheit 6 und der Extrusionseinheit 7 gleichzeitig. Während des Förderns des Verbundmateriales 29 wird somit der Hybridgarn 21 von den drei Rollen 22 abgerollt und in den konisch sich verjüngenden Abschnitt des Pultrusionskanales 9 eingeführt. An dem zweiten Abschnitt des Pultrusionskanales 9 mit dem konstanten Durchmesser werden die drei Hybridgarne 21 mit der ersten Heizeinrichtung 8 erwärmt, so dass der thermoplastische Kunststoff der Matrix an den Hybridgarnen 21 schmilzt und dadurch die Glasfasern in den drei Hybridgarnen 21 mittels der Matrix aus dem thermoplastischen Kunststoff stoffschlüssig miteinander verbunden werden als Pultrusionsvorgang. Anschließend wird das Verbundmaterial 29 mit den Fasern und der Matrix zu dem Abschnitt des Pultrusionskanales 9 mit der ersten Kühleinrichtung 10 gefördert bzw. bewegt, so dass dadurch das Verbundmaterial 29 mit den Glasfasern und dem thermoplastischen Kunststoff abgekühlt und dadurch erhärtet wird. Nach dem Austreten des Verbundmateriales 29 aus den Fasern und der Matrix wird das Verbundmaterial 29 mit der Matrix aus der bereits teilweise hergestellten Verstärkungsstruktur 1 von der Fördereinrichtung 12 in die Extrusionseinheit 7 eingefördert bzw. hineingeführt. Aufgrund des Abkühlens des Verbundmateriales 29 mit den Fasern in der ersten Kühleinrichtung 10 kann das Verbundmaterial 29 mit den Fasern von der Fördereinrichtung 12 gefördert werden. In der Extrusionseinheit 7 wird das Verbundmaterial 29 mit den Fasern und der Matrix an dem Abschnitt des Extrusionskanales 15 mit dem konstanten Durchmesser von der zweiten Heizeinrichtung 16 wieder geringfügig soweit erwärmt, dass an dem Endbereich in der Förderrichtung des Extrusionskanales 15 die abschließende Formgebung der Querschnittsform der herzustellenden Verstärkungsstruktur 1 ausgeformt wird. Das in Fig. 1 linke Ende des Extrusionskanales 15 weist eine kreisförmige oder quadratische Querschnittsform auf, so dass dadurch mittels der Prozesseinheit 5 Verstärkungsstrukturen 1 mit einem kreisförmigen oder quadratischen Querschnitt hergestellt werden. Nach dem Austreten der Verstärkungsstrukturen 1 aus dem Extrusionskanal 15 der Extrusionseinheit 7 wird von dem Gebläse 18 durch das Kühlrohr 19 Umgebungsluft als Kühlluft zu dem Stab 2 geleitet, so dass dadurch eine schnellere Abkühlung der Verstärkungsstrukturen 1 erreicht werden kann.

Die mit dem Verfahren hergestellten Verstärkungsstrukturen 1 sind als gerade oder gekrümmte Stäbe 2 ausgebildet. Die Stäbe 2 werden von der Prozesseinheit 5 an den erforderlichen Verbindungsposition auf einer Grundstruktur 4 hergestellt, so dass die Prozesseinheit 5 auf einer Bewegungsbahn 26 als einer Geraden 27 oder gekrümmten Linie 27 mittels Bewegungsarmen 28 eines in Fig. 2 stark vereinfacht dargestellten Roboters bewegt wird. Die Bewegungsbahn 26 als Gerade 27 oder gekrümmte Linie 27 entspricht dabei im Wesentlichen der Längsachse der von der Prozesseinheit 5 hergestellten Verstärkungsstruktur 1. Nach der Herstellung der Stäbe 2 und dem Auflegen der Stäbe 2 bzw. der Verstärkungsstrukturen 1 auf die Oberfläche der Grundstruktur 4 ist keine Relativbewegung bzw. Bewegung der hergestellten Stäbe 2 zu anderen bereits hergestellten oder noch herzustellenden Stäbe 2 oder zu der Grundstruktur 2 erforderlich, da die Stäbe 2 mit der Prozesseinheit 5 bereits an der erforderlichen Verbindungsposition auf der Grundstruktur 4 hergestellt werden. Dadurch können die Kosten für die Herstellung einer Tragstruktur 3 mit der Grundstruktur 4 und Verstärkungsstrukturen 1 mittels der Prozesseinheit 5 wesentlich reduziert werden. In Fig. 2 sind die Rollen 22 und die Hybridgarne 21 nicht dargestellt. Die Verstärkungsstruktur 1 besteht aus Stäben 2 aus dem Verbundmaterial 29, nämlich mit Fasern als Glasfasern und der Matrix als thermoplastischen Kunststoff.

In einem weiteren, nicht dargestellten Ausführungsbeispiel der Prozesseinheit 5 sind an den Rollen 22 die Fasern, z. B. Glas-, Aramid- oder Karbonfasern, aufgewickelt und die Matrix als dem thermoplastischen Kunststoff wird gesondert in einem Behälter mit einer Behälterheizung in einem erwärmten Zustand aufbewahrt und mittels einer nicht dargestellter Matrixfördereinrichtung zu der Pultrusionseinheit 6 gefördert. Die Pultrusionseinheit 6 und die Extrusionseinheit 7 kann auch als nur ein Bauteil ausgebildet sein, indem beispielsweise nach dem Pultrudieren unmittelbar das Extrudieren, d. h. die abschließende Formgebung einer Außenseite 33 des Stabe 2 ausgeführt wird, ohne dass die Fördereinrichtung 12 zwischen der Extrusionseinheit 7 und der Pultrusionseinheit 6 angeordnet ist.

In einem weiteren, nicht dargestellten Ausführungsbeispiel wird anstelle von thermoplastischem Kunststoff als der Matrix ein duroplastischer Kunststoff oder ein Kunststoff als ein reaktiver Hotmelt bzw. reaktiver Schmelzklebstoff bzw. reaktiver Schmelzpolymer eingesetzt. Der duroplastische Kunststoff wird gesondert in einem Behälter gelagert und mittels einer Matrixfördereinrichtung der Extrusionseinheit 7 und/oder der Pultrusionseinheit 6 zugeführt. Das Erhärten des duroplastischen Kunststoffes erfolgt dabei mittels einer Bestrahlung oder einer Zugabe von chemischen Additiven. Das Erhärten des Kunststoffes als reaktiver Hotmelt bzw. reaktiver Schmelzklebstoff bzw. reaktiver Schmelzpolymer wird insbesondere durch das Erwärmen als Veränderungsparameter während der Verarbeitung der Matrix in der Pultrusionseinheit 6 und/oder in der Extrusionseinheit 7 ausgeführt. Abweichend hiervon kann das Erhärten des Kunststoffes als reaktiver Hotmelt auch durch Feuchtigkeit und/oder UV-Licht und/oder Sauerstoffentzug ausgeführt werden. Bei einer Erhärtung durch UV-Licht erfolgt somit nach der Auflegen der wenigstens einen Verstärkungsstruktur 1 auf die Grundstruktur 4 eine Bestrahlung der wenigstens einen Verstärkungsstruktur 1 mit UV-Licht mittels einer UV-Lichtquelle (nicht dargestellt).

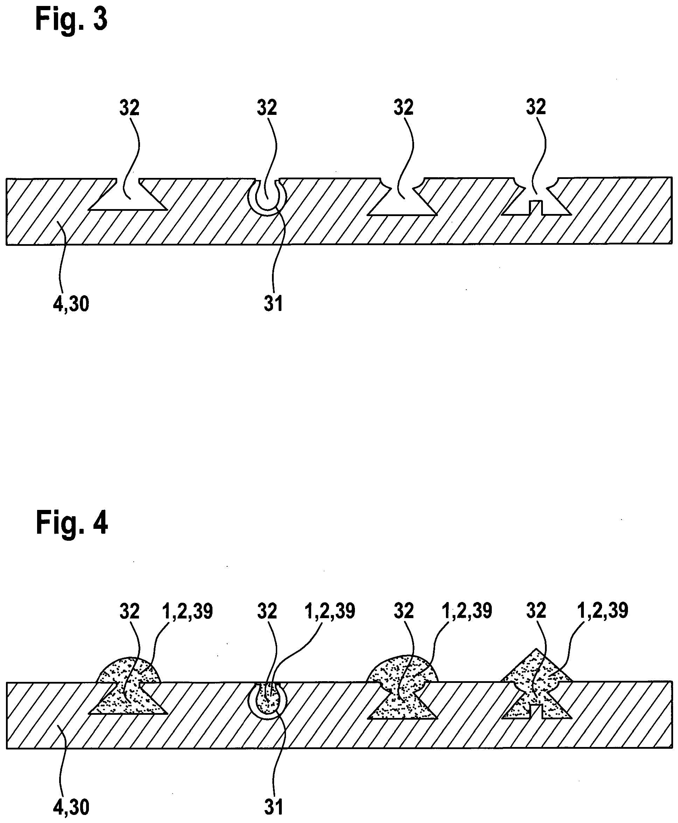

An der Prozesseinheit 5 sind Vorbearbeitungseinrichtungen 34, 36, 38 als ein Werkzeug 34 als ein Fräswerkzeug 35, eine Grundstrukturheizeinrichtung 36, beispielsweise ein Laser 37 oder ein Infrarotstrahler 38, und eine Zugabevorrichtung 39 für Klebstoff 31 befestigt (nur in Fig. 2 dargestellt). Das Werkzeug 34, die Grundstrukturheizeinrichtung 36 und die Zugabevorrichtung 39 sind mit mechanischen Einrichtungen relativ zu der Prozesseinheit 5 beweglich, so dass die Vorbearbeitungseinrichtungen 34, 36, 38 an unterschiedliche Bewegungsbahnen 26 mit unterschiedlichen Oberflächen von Grundstrukturen 4 in der erforderlichen Position angeordnet werden können. Vor dem Auflegen der an der Prozesseinheit 5 hergestellten Verstärkungsstruktur 1 auf die Oberfläche der Grundstruktur 4 wird mit dem Fräswerkzeug 35 eine längliche Aussparung 32 (Fig. 3) mit einer beliebigen Querschnittsform, abhängig von der Geometrie des Fräswerkzeuges 35, in die Grundstruktur 4 eingefräst. Die Aussparungen 32 weisen dabei einen Hinterschnitt auf, so dass nach dem Abkühlen und Erhärten des Verbundmateriales 29 mit den Fasern und der Matrix innerhalb der Aussparung 32 eine formschlüssige Verbindung der Stäbe 2 als Verstärkungsstruktur 1 an der Grundstruktur 1, beispielsweise Platten 30, ausgebildet ist.

Anschließend wird die Oberfläche der Grundstruktur 4 im Bereich der Aussparung 32 mit der Grundstrukturheizeinrichtung 36 erwärmt, so dass sich die Matrix des Verbundmateriales 29 stoffschlüssig mit dem Werkstoff der Grundstruktur 4 verbinden kann und nach dem Abkühlen und Erhärten des Verbundmateriales 29 und der Grundstruktur 4 eine feste stoffschlüssige Verbindung zwischen der Grundstruktur 4 und der Verstärkungsstruktur 1 besteht.

Anschließend wird mit der Zugabevorrichtung 39 auf die Oberfläche der Grundstruktur 4 im Bereich der Aussparung 32 Klebstoff 31 aufgebracht, um nach dem Auflegen der Verstärkungsstruktur 1 auf die Grundstruktur 4 und dem Erhärten des Klebstoffes 31 die Verstärkungsstruktur 1 stoffschlüssig mit der Grundstruktur 4 zu verbinden. Im Allgemeinen wird abhängig vom Werkstoff der Grundstruktur 4 nur die Grundstrukturheizeinrichtung 36 oder nur die Zugabevorrichtung 39 betrieben. Bei einer Grundstruktur 4 aus Metall, beispielsweise Stahl oder Aluminium, wird nur die Zugabevorrichtung 39 und nicht die Grundstrukturheizeinrichtung 36 betrieben. Bei einer Grundstruktur 4 aus thermoplastischen Kunststoff wird nicht die Zugabevorrichtung 39 und nur die Grundstrukturheizeinrichtung 36 betrieben.

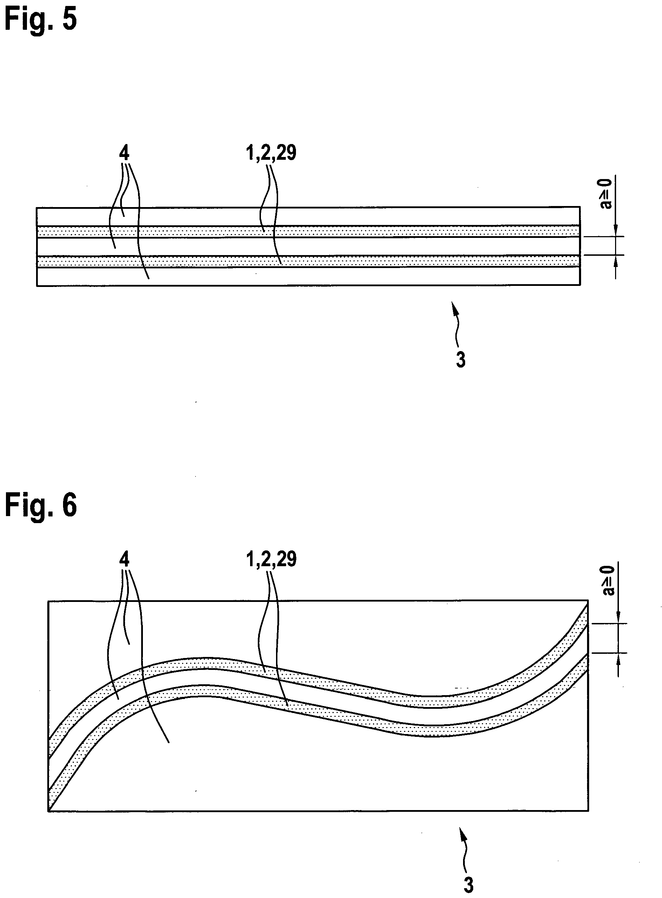

In Fig. 5 ist ein Querschnitt von Grundstrukturen 4 und Verstärkungsstrukturen 1 als Tragstruktur 3 bzw. Hybridbauteil 3 in einem ersten Ausführungsbeispiel dargestellt. Die Grundstrukturen 4 weisen eine gerade Oberfläche auf und die Grundstrukturen 4 und Verstärkungsstrukturen 1 sind schichtartig übereinander ausgebildet. Beispielsweise wird eine Schicht der Grundstruktur 4 mit einem 3D-Drucker hergestellt und anschließend die Verstärkungsstruktur 1 mit der Prozesseinheit 5. Die Stäbe 2 können auch ohne eine Abstand a zwischen zwei benachbarten Stäben 2 in einer Richtung senkrecht zu der Zeichenebene von Fig. 5 auf die Oberfläche der Grundstruktur 4 extrudiert werden, so dass auch die Verstärkungsstruktur 1 eine scheibenförmige Geometrie aufweisen kann.

In Fig. 6 ist ein Querschnitt von Grundstrukturen 4 und Verstärkungsstrukturen 1 als Tragstruktur 3 in einem zweiten Ausführungsbeispiel dargestellt. Die Grundstrukturen 4 weisen eine gekrümmte Oberfläche auf und die Grundstrukturen 4 und Verstärkungsstrukturen 1 sind schichtartig übereinander ausgebildet, so dass auch die Verstärkungsstrukturen 1 gekrümmt ausgebildet sind.

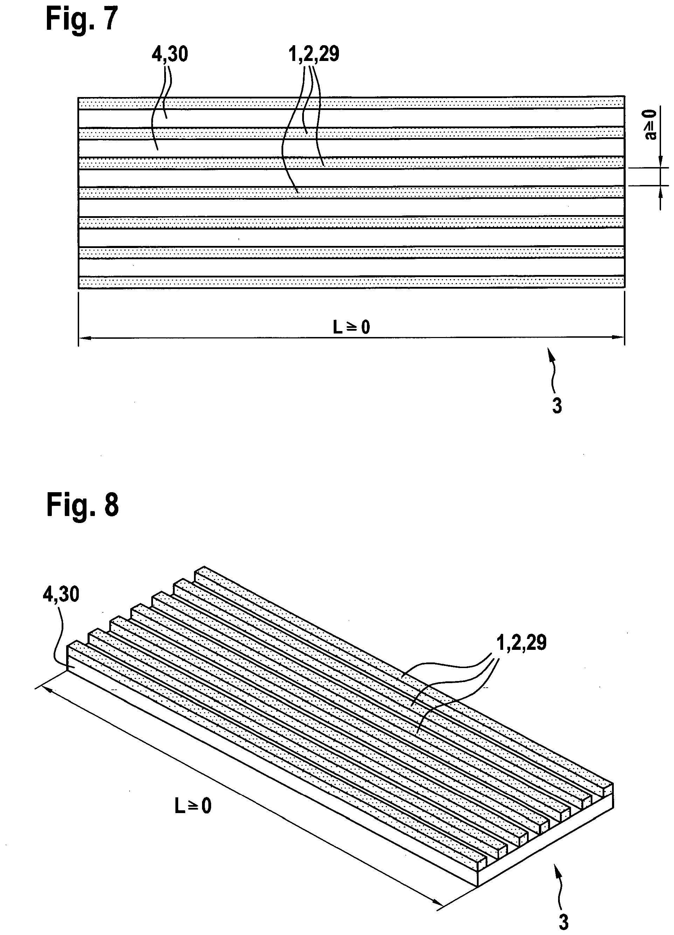

In Fig. 7 ist eine Draufsicht auf die Grundstruktur 4 und Verstärkungsstrukturen 1 als Hybridbauteil 3 und in Fig. 8 eine perspektivische Ansicht der Grundstruktur 4 mit Verstärkungsstrukturen 1 in einem dritten Ausführungsbeispiel dargestellt. Die Grundstruktur 4 weist eine gerade Oberfläche auf, so dass auch die Verstärkungsstrukturen 1 gerade sind. Die Verstärkungsstrukturen 1 weisen parallel zu der Zeichenebene von Fig. 7 einen Abstand a auf. Die stabförmigen Verstärkungsstrukturen 1 weisen eine Länge L auf als Längsausdehnung in einer Längsachse der Verstärkungsstrukturen 1.

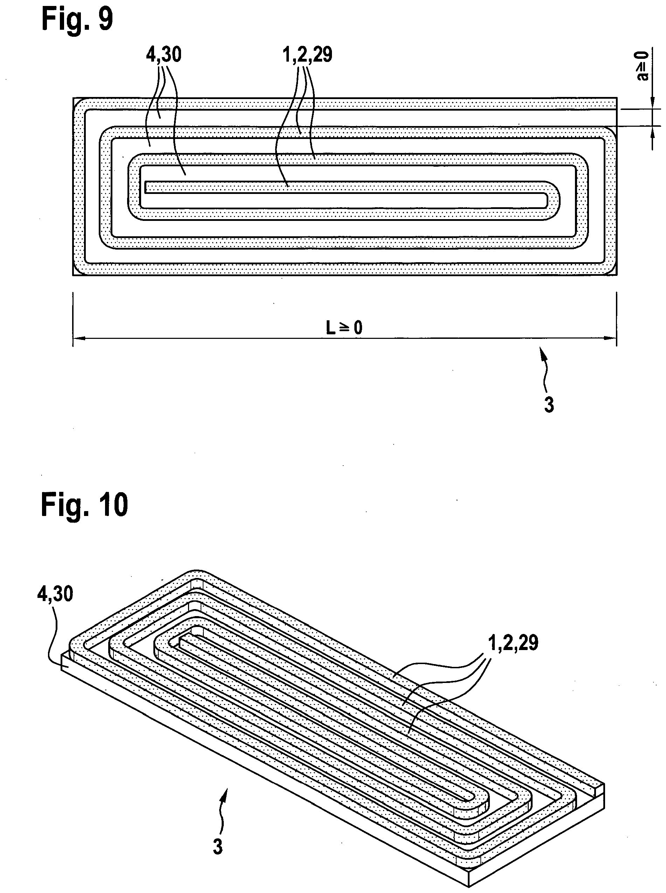

In Fig. 9 ist eine Draufsicht auf die Grundstruktur 4 und Verstärkungsstrukturen 1 als Tragstruktur 3 und in Fig. 10 eine perspektivische Ansicht der Grundstruktur 4 mit Verstärkungsstrukturen 1 in einem vierten Ausführungsbeispiel dargestellt. Die Grundstruktur 4 weist eine gerade Oberfläche auf, so dass auch die Verstärkungsstrukturen 1 gerade sind. Die Verstärkungsstrukturen 1 weisen parallel zu der Zeichenebene von Fig. 9 einen Abstand a auf.

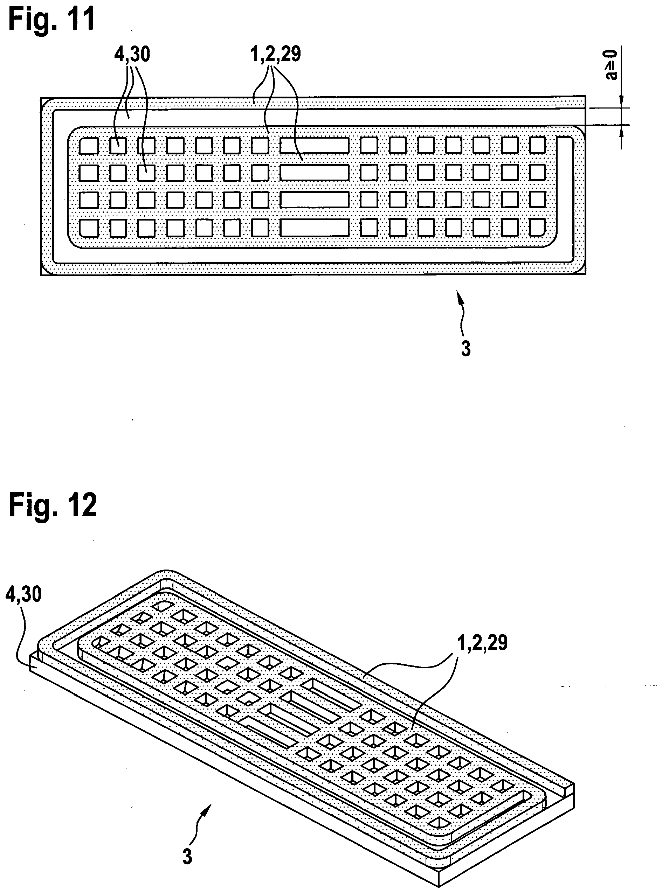

In Fig. 11 ist eine Draufsicht auf die Grundstruktur 4 und Verstärkungsstrukturen 1 als Hybridbauteil 3 und in Fig. 12 eine perspektivische Ansicht der Grundstruktur 4 mit Verstärkungsstrukturen 1 in einem fünften Ausführungsbeispiel dargestellt. Die Grundstruktur 4 weist eine gerade Oberfläche auf, so dass auch die Verstärkungsstrukturen 1 gerade sind. Die Verstärkungsstrukturen 1 weisen parallel zu der Zeichenebene von Fig. 7 einen Abstand a auf und ferner sind einzelne extrudierte Stäbe 2 stoffschlüssig ohne Abstand a miteinander verbunden indem die Prozesseinheit 5 mit einer entsprechenden Bewegungsbahn 26 bewegt wird. Zum stoffschlüssigen Verbinden der Stäbe 2 werden diese dahingehend extrudiert, dass die Matrix noch nicht abgekühlt ist und/oder die bereits extrudierten Stäbe 2 für die stoffschlüssige Verbindung erwärmt werden.

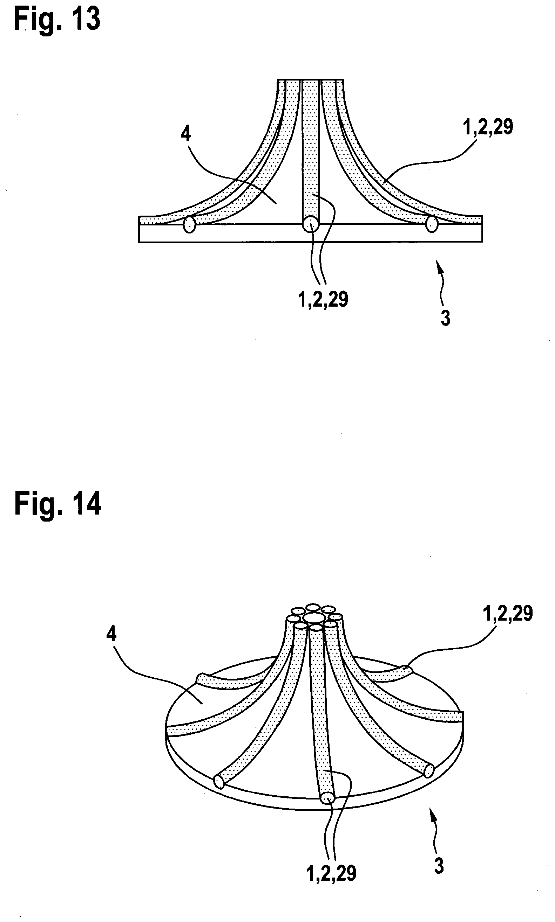

In Fig. 13 ist eine Seitenansicht auf die Grundstruktur 4 und Verstärkungsstrukturen 1 als Tragstruktur 3 und in Fig. 14 eine perspektivische Ansicht der Grundstruktur 4 mit Verstärkungsstrukturen 1 in einem sechsten Ausführungsbeispiel dargestellt. Die Grundstruktur 4 weist eine gekrümmte Oberfläche auf, so dass auch die Verstärkungsstrukturen 1 gekrümmt sind. Die Verstärkungsstrukturen 1 sind teilweise in Aussparungen 32 der Grundstruktur 4 angeordnet.

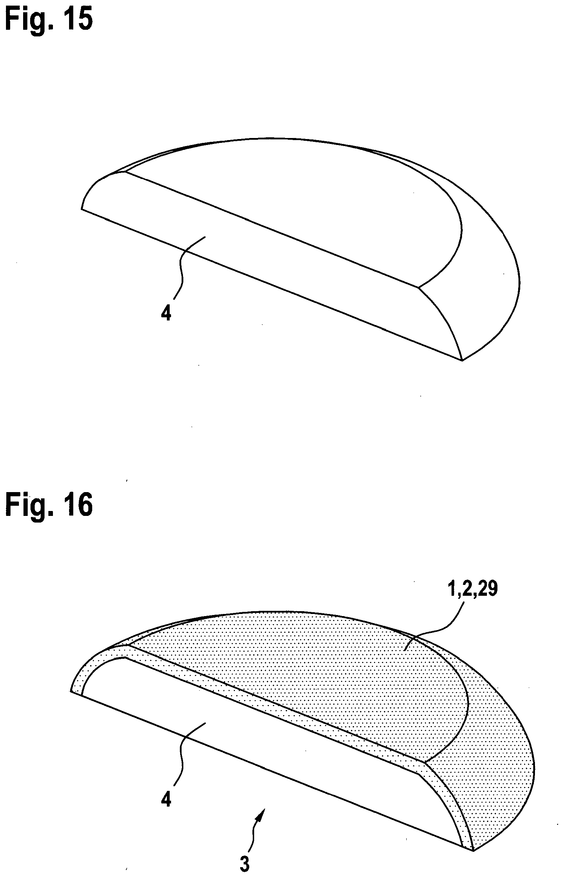

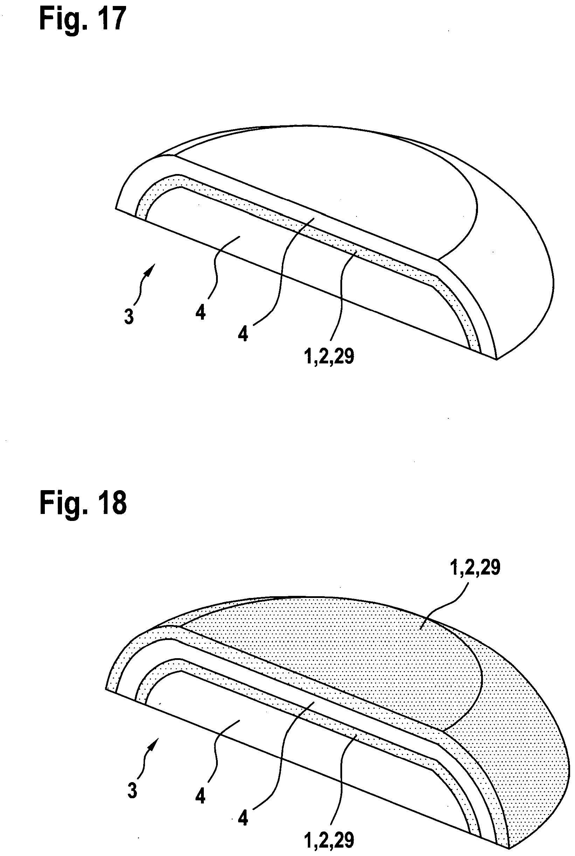

In den Fig. 15 bis 18 ist ein siebtes Ausführungsbeispiel der Grundstruktur 4 und Verstärkungsstruktur 1 als Hybridbauteil 3 dargestellt. Die in Fig. 15 dargestellte Grundstruktur 4 wird von einer G-Maschine 41 hergestellt bzw. zur Verfügung gestellt, beispielsweise von einem 3D-Drucker 44 hergestellt, von einer Spritzgussmaschine hergestellt oder aus einem Speicher 45 als einem Magazin 46 entnommen, das heißt lediglich zur Verfügung gestellt. Bei der Herstellung der in Fig. 15 dargestellten Grundstruktur 5, die beispielsweise als eine Wabenstruktur hergestellt wird, wird die in Fig. 15 dargestellte Grundstruktur 4 mit einem Fördersystem 43, beispielsweise einem Förderband 47 oder Roboter 48, zu der PE-Maschine 42 transportiert. In der PE-Maschine 42 werden mit der Prozesseinheit 5 als der Pultrusions- und Extrusionseinheit 6, 7 die Verstärkungsstrukturen 1 aufgebracht. Dabei werden eine Vielzahl von Stäben 2 ohne Abstand nebeneinander auf die Oberseite der in Fig. 15 dargestellten Grundstruktur 4 aufgebracht und mit der Grundstruktur 4 verbunden. Anschließend wird das in Fig. 16 dargestellte Hybridbauteil 3 als die Tragstruktur 3 wieder zu der G-Maschine 41 als der 3D-Drucker 44 oder der Spritzgussmaschine transportiert. Hier wird eine zusätzliche Schicht der Grundstruktur 4 auf die in Fig. 16 dargestellte Verstärkungsstruktur 1 aufgebracht. Nach diesem Herstellungsschritt weist die Tragstruktur 3 die in Fig. 17 dargestellte Geometrie auf. Anschließend wird nach diesem Herstellungsschritt das in Fig. 17 dargestellte Hybridbauteil 3 wiederum zu der PE-Maschine 42 mit dem Fördersystem 43 transportiert und anschließend wiederum die Verstärkungsstruktur 1 aufgebracht werden. Der Herstellungsvorgang kann auch dahingehend erfolgen, dass bereits das Hybridbauteil 3 gemäß der Darstellung in Fig. 16 das endgültige Fertigprodukt darstellt und keine weiteren Herstellungsschritte ausgeführt werden. Die in dem siebten Ausführungsbeispiel beschriebene Herstellungsweise gilt vorzugsweise auch analog für das erste bis sechste Ausführungsbeispiel.

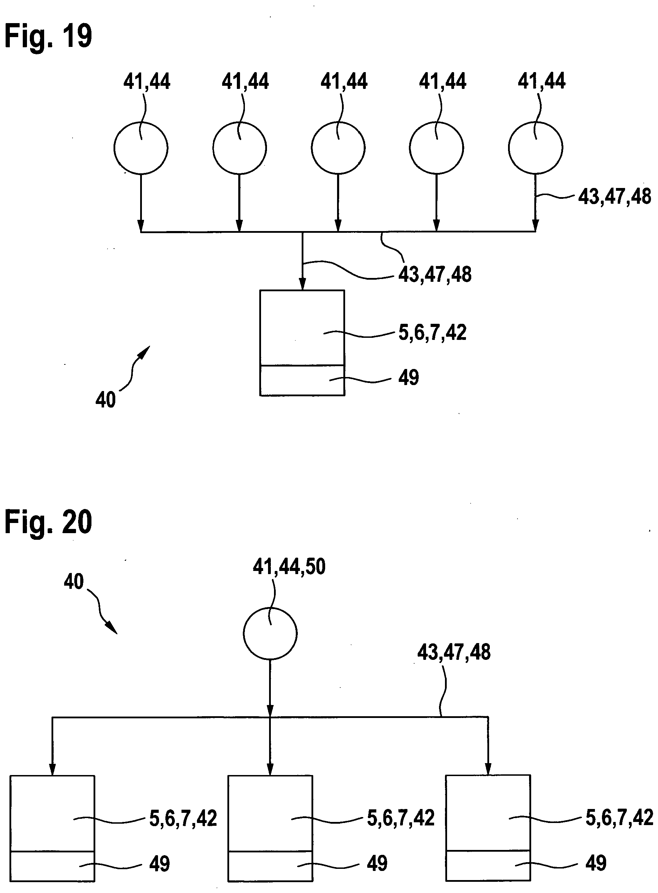

In Fig. 19 ist ein erstes Ausführungsbeispiel eines Maschinensystems 40 dargestellt. Insgesamt fünf 3D-Drucker 44 als G-Maschinen 41 sind mit einer PE-Maschine 42, als eine Prozesseinheit 5 an einem Roboter, zu dem Maschinensystem 5 kombiniert. Die Taktzahl je eines 3D-Druckers 44 entspricht ungefähr einem Fünftel der Taktzahl der PE-Maschine 42. Die Summe der Taktzahlen der 3D-Drucker 44 entspricht somit im Wesentlichen der Taktzahl der nur einen PE-Maschine 42. Die von der G-Maschine 41 hergestellten Grundstrukturen 4 werden mit dem Fördersystem 43, beispielsweise einem Förderband 47 und/oder einem Roboter 48, zu der PE-Maschine 42 transportiert. An der PE-Maschine 42 wird auf die Grundstruktur 4 die Verstärkungsstruktur 1 aufgebracht, sodass dadurch die Tragstruktur 3 als das Hybridbauteil 3 endgültig hergestellt werden kann und anschließend an einer Entnahmestelle 49 entnommen wird.

In Fig. 20 ist ein zweites Ausführungsbeispiel des Maschinensystems 40 dargestellt. Eine Spritzgussmaschine 50 als die G-Maschine 41 ist mit drei PE-Maschinen 42 kombiniert. Die Taktzahl einer PE-Maschine 42 entspricht ungefähr einem Drittel der Taktzahl der Spritzgussmaschine 50. Die Spritzgussmaschine 50 kann beispielsweise in zehn Minuten dreißig Grundstrukturen 4 herstellen und eine PE-Maschine 42 kann in zehn Minuten auf zehn Grundstrukturen 4 je eine Verstärkungsstruktur 1 für je eine Grundstruktur 4 aufbringen bzw. herstellen, das heißt in zehn Minuten zehn Verstärkungsstrukturen 1 herstellen. Die Summe der Taktzahlen der PE-Maschinen 42 entspricht somit der Taktzahl der Spritzgussmaschine 50. Im Betrieb des Maschinensystems 40 sind somit sowohl die Spritzgussmaschine 50 als auch die PE-Maschinen 42 ständig voll ausgelastet. Das Fördersystem 43 ist entsprechend ausgelegt, um die Grundstrukturen 4 von der Spritzgussmaschine 50 zu den PE-Maschinen 42 zu transportieren.

Insgesamt betrachtet sind mit dem erfindungsgemäßen Verfahren zur Verstärkung der Grundstruktur 4 wesentliche Vorteile verbunden. Die Verstärkungsstrukturen 1 sind aus dem Verbundmaterial 29 mit Fasern und einer Matrix hergestellt. Die Prozesseinheit 5 wird dabei während der Herstellung entlang einer Längsachse der herzustellenden Verstärkungsstruktur 1, insbesondere Stabes 2, als eine gerade oder gekrümmte Bewegungsbahn 26 bewegt, so dass dadurch die Stäbe 2 aus dem Verbundmaterial 29 an der erforderlichen Verbindungsposition bereits auf der Oberfläche der Grundstruktur 4 hergestellt werden können und dadurch die Kosten für die Herstellung der Tragstruktur 3 wesentlich reduziert sind. Bei einem Einsatz des Hybridgarnes 21 ist der Anteil von der Matrix und den Fasern in den Stäben 2 konstant. Durch den Einsatz einer unterschiedlichen Anzahl an Hybridgarnen 21 bzw. Fasern zur Herstellung jeweils eines Stabes 2 ist es auch möglich, Stäbe 2 mit einem unterschiedlichen Durchmesser herzustellen. Ferner können die Stäbe 2 auch in einer unterschiedlichen Querschnittsform hergestellt werden. Hierzu weist das Ende des Extrusionskanales 15 ein in Fig. 1 nicht dargestelltes austauschbares Formgebungsteil auf, so dass dadurch auch Stäbe 2 neben der beschriebenen Kreisform auch als ellipsenförmige Stäbe 2 oder rechteckförmige Stäbe 2 oder quadratische Stäbe 2 in der Querschnittsform einfach hergestellt werden können. Die Anpassung der Geometrie und/oder Form der Verstärkungsstrukturen 1 an unterschiedliche Grundstrukturen 4 mit unterschiedlichsten Geometrien kann einfach und preiswert dadurch erfolgen, dass der Roboter die Proesseinheit 5 lediglich auf einer angepassten Bewegungsbahn 26 bewegt. Hierzu weist der Roboter entweder Sensoren zur Erfassung der Geometrie der Grundstruktur 4 auf und/oder die Geometrie der Grundstruktur 4 ist in einer Recheneinheit des Roboters gespeichert. Aufgrund der Daten zur Geometrie der Grundstruktur 4 kann mit der Recheneinheit die Bewegungsbahn 26 berechnet werden bei vorgegebener Position für die wenigstens eine Verstärkungsstruktur 1. Die Anpassung der Geometrie der wenigstens eine Verstärkungsstruktur 1 an die Geometrie der Grundstruktur 4 kann somit ausschließlich programm- und/oder datentechnisch ausgeführt werden, weil mit dem Roboter beliebige Bewegungsbahnen 26 im Raum ausgeführt werden können. Die Anpassung oder Veränderung der Geometrie und/oder Form der Grundstrukturen 4 kann beim Herstellen mit der G-Maschine, insbesondere einem 3D-Drucker, ausschließlich programm- und/oder datentechnisch ausgeführt werden mittels einer entsprechenden Steuerung der G-Maschine mit einer Recheneinheit.

In dem Maschinensystem 40 ist die Anzahl der G-Maschinen 41 an die Anzahl der PE-Maschinen 42 optimal angepasst, das heißt aufgrund der vorhandenen Summen an Taktzahlen der G-Maschinen 41 und PE-Maschinen 42 sind sowohl die G-Maschinen 41 als auch die PE-Maschinen 42 während der Herstellung der Hybridbauteile 3 ständig im Wesentlichen ausgelastet. Dadurch fallen in vorteilhafter Weise für die Herstellung der Hybridbauteile 3 je Hybridbauteil 3 geringe Maschinenkosten an. Unnötige Ruhezeiten einer G-Maschine 41 oder einer PE-Maschine 42 in einem größeren Umfang können dadurch in vorteilhafter Weise vermieden werden. Die Hybridbauteile 3 können für die unterschiedlichsten Anwendungen eingesetzt werden, beispielsweise im Maschinenbau als Tragstrukturen 3 oder auch in Anwendungen des täglichen Lebensbedarfs, beispielsweise als Teller zum Essen oder als Schuhsohlen. Der Begriff der Tragstruktur 3 ist somit breit als ein Hybridbauteil 3 auszulegen und eine spezielle Tragwirkung der Tragstruktur 3 bzw. des Hybridbauteils 3 ist nicht zwangsweise notwendig.

## Patentansprüche

1. Verfahren zur Herstellung einer Tragstruktur (3) als Hybridbauteil (3) mit einer Grundstruktur (4) und mit wenigstens einer Verstärkungsstruktur (1) mit den Schritten:
- Herstellen der wenigstens einen Verstärkungsstruktur (1) für je eine Grundstruktur (4),
- zur Verfügung stellen der Grundstruktur (4) mit einer G-Maschine (41), welche eine Maschine zur Zurverfügungstellung der Grundstruktur ist,
- Verbinden der wenigstens einen Verstärkungsstruktur (1) mit der Grundstruktur (4), so dass die wenigstens eine Verstärkungsstruktur (1) in einer Verbindungsposition mit der Grundstruktur (4) verbunden ist und die Grundstruktur (4) zusammen mit der wenigstens einen Verstärkungsstruktur (1) die Tragstruktur (3) bildet,
wobei, das Herstellen der wenigstens einen Verstärkungsstruktur (1) für je eine Grundstruktur (4) ausgeführt wird indem die wenigstens eine Verstärkungsstruktur (1), aus einem Verbundmaterial mit Fasern und einer Matrix mittels Pultrusion und/oder mit Extrusion hergestellt wird bzw. werden und eine Pultrusionseinheit (6) und/oder eine Extrusionseinheit (7) als PE-Maschine (42) zur Herstellung der Verstärkungsstruktur (1) im Raum bewegt wird, so dass die wenigstens eine Verstärkungsstruktur (1), nach der Pultrusion und/oder Extrusion jeweils an der erforderlichen Verbindungsposition auf die Grundstruktur (4) pultrudiert und/oder extrudiert wird bzw. werden und die wenigstens eine Verstärkungsstruktur (1), bezüglich der Länge der jeweiligen Verstärkungsstruktur (1) zu mehr als 50% mit der Grundstruktur (4) verbunden sind, so dass die Länge der Verbindung zwischen der Verstärkungsstruktur (1) und der Grundstruktur (4) größer ist als 50% der Länge der Verstärkungsstruktur (1)
und
das Verfahren mit einem Maschinensystem (40) ausgeführt wird und in dem Maschinensystem (40) die Anzahl der wenigstens einen G-Maschine (41) und die Anzahl der wenigstens einen PE-Maschine (42) unterschiedlich sind und die von der wenigstens einen G-Maschine (41) zur Verfügung gestellte Grundstruktur (4) mit einem Fördersystem (43) zu der wenigstens einen PE-Maschine (42) transportiert wird.

2. Verfahren nach Anspruch 1,
**dadurch gekennzeichnet, dass**
die Grundstruktur (4) mit der wenigstens einen G-Maschine (41) hergestellt wird und/oder
eine Vielzahl an Grundstrukturen (4) mit der wenigstens einen G-Maschine (41) zur Verfügung gestellt werden und mit dem Fördersystem (43) zu der wenigstens einen PE-Maschine (42) transportiert werden und mit der wenigstens einen PE-Maschine (42) die Verstärkungsstrukturen (1) auf den Grundstrukturen (4) hergestellt werden.

3. Verfahren nach Anspruch 1 oder 2,
**dadurch gekennzeichnet, dass**
die wenigstens eine Verstärkungsstruktur (1), bezüglich der Länge der jeweiligen Verstärkungsstruktur (1) zu mehr als 70%, 80% oder 90% mit der Grundstruktur (4) verbunden sind, so dass die Länge der Verbindung zwischen der Verstärkungsstruktur (1) und der Grundstruktur (4) größer ist als 70%, 80% oder 90% der Länge der Verstärkungsstruktur (1).

4. Verfahren nach einem oder mehreren der vorhergehenden Ansprüche,
**dadurch gekennzeichnet, dass**
die pro Zeiteinheit von nur einer G-Maschine (41) zur Verfügung gestellten Grundstrukturen (4) einen Unterschied aufweisen zu der von nur einer PE-Maschine (42) pro Zeiteinheit hergestellten Verstärkungsstrukturen (1) für je eine Grundstruktur (4), welcher größer ist als 20%, 30% oder 50%.

5. Verfahren nach einem oder mehreren der vorhergehenden Ansprüche,
**dadurch gekennzeichnet, dass**
die von der wenigstens einen G-Maschine (41) zur Verfügung gestellte Grundstruktur (4), insbesondere Grundstrukturen (4), mit einem Fördersystem (43) als Förderband (47) und/oder Roboter (48) zu der wenigstens einen PE-Maschine (42) transportiert wird bzw. werden.

6. Verfahren nach einem oder mehreren der vorhergehenden Ansprüche,
**dadurch gekennzeichnet, dass**
nach der Herstellung der wenigstens einen Verstärkungsstruktur (1) auf der Grundstruktur (4) die Grundstruktur (4) mit der wenigstens einen Verstärkungsstruktur (1) mit dem Fördersystem (43) von der wenigstens einen PE-Maschine (42) zu der wenigstens einen G-Maschine (41) rücktransportiert wird und auf der bereits hergestellten Verstärkungsstruktur (1) eine weitere Grundstruktur (4) als zusätzliche Grundstruktur (4) mit der wenigstens einen G-Maschine (41) aufgebracht wird.

7. Verfahren nach einem oder mehreren der vorhergehenden Ansprüche,
**dadurch gekennzeichnet, dass**
die pro Zeiteinheit von nur einer G-Maschine (41) zur Verfügung gestellten Grundstrukturen (4) kleiner sind als die von nur einer PE-Maschine (42) pro Zeiteinheit hergestellten Verstärkungsstrukturen (1) für je eine Grundstruktur (4) und in dem Maschinensystem (40) die Anzahl der wenigstens einen G-Maschine (41) größer ist als die Anzahl der wenigstens einen PE-Maschine (42), insbesondere das Maschinensystem (40) über nur eine PE-Maschine (42) verfügt
oder
die pro Zeiteinheit von nur einer G-Maschine (41) zur Verfügung gestellten Grundstrukturen (4) größer sind als die von nur einer PE-Maschine (42) pro Zeiteinheit hergestellten Verstärkungsstrukturen (1) für je eine Grundstruktur (4) und in dem Maschinensystem (40) die Anzahl der wenigstens einen PE-Maschine (42) größer ist als die
Anzahl der wenigstens einen G-Maschine (41), insbesondere das Maschinensystem (40) über nur eine G-Maschine (41) verfügt.

8. Verfahren nach einem oder mehreren der vorhergehenden Ansprüche,
**dadurch gekennzeichnet, dass**
mit der G-Maschine (41) unterschiedliche Grundstrukturen (4) hergestellt werden
und/oder
mit der PE-Maschine (42) unterschiedliche Verstärkungsstrukturen (1) hergestellt werden
und/oder
das Verfahren mit einem Maschinensystem (40) gemäß einem oder mehrere der Ansprüche 12 bis 15 ausgeführt wird.

9. Verfahren nach einem oder mehreren der vorhergehenden Ansprüche,
**dadurch gekennzeichnet, dass**
mit der pultrudierten und/oder extrudierten wenigstens einen Verstärkungsstruktur (1), nach dem Pultrudieren und/oder Extrudieren und dem Auflegen auf die Grundstruktur (4) keine Bewegung relativ zu der Grundstruktur (4) ausgeführt wird bzw. werden
und/oder
die Matrix der pultrudierten und/oder extrudierten Verstärkungsstruktur (1), an der erforderlichen Verbindungsposition an und/oder auf der Grundstruktur (4) erhärtet
und/oder
die Pultrusion und Extrusion gleichzeitig und/oder kontinuierlich ausgeführt wird.

10. Verfahren nach einem oder mehreren der vorhergehenden Ansprüche,
**dadurch gekennzeichnet, dass**
für die Herstellung der wenigstens einen Verstärkungsstruktur (1) als erster Schritt das Pultrudieren ausgeführt wird und als zweiter Schritt das Extrudieren ausgeführt wird, so dass die in dem ersten Schritt teilweise hergestellte pultrudierte wenigstens eine Verstärkungsstruktur (1), in dem zweiten Schritt mit Extrudieren nachbearbeitet wird bzw. werden
und/oder
die wenigstens eine Verstärkungsstruktur (1), vorzugsweise sämtliche Verstärkungsstrukturen (1), insbesondere kontinuierlich, hergestellt wird bzw. werden, indem die Pultrusionseinheit (6) und/oder Extrusionseinheit (7), insbesondere kontinuierlich, im Raum in einer Bewegungsbahn (26) bewegt wird an der erforderlichen Verbindungsposition in einem Abstand zu der Grundstruktur (4).

11. Verfahren nach einem oder mehreren der vorhergehenden Ansprüche,
**dadurch gekennzeichnet, dass**
die wenigstens eine Verstärkungsstruktur (1) als Stab (2) in seiner Länge zu mehr als 50%, 70%, 80% oder 90% an der Außenseite (33) mit der Grundstruktur (4) verbunden wird.

12. Maschinensystem (40) zur Herstellung einer Tragstruktur (3) als Hybridbauteil (3) mit einer Grundstruktur (4) und mit wenigstens einer Verstärkungsstruktur (1), umfassend
- wenigstens eine G-Maschine (41) zur Verfügung stellen der Grundstruktur (4),
- wenigstens eine PE-Maschine (42) mit einer Pultrusionseinheit (6) und/oder einer Extrusionseinheit (7) zur Herstellung der wenigstens einen Verstärkungsstruktur (1),
**dadurch gekennzeichnet, dass**
die Anzahl der wenigstens einen G-Maschine (41) und die Anzahl der wenigstens einen PE-Maschine (42) unterschiedlich sind und das Maschinensystem (40) ein Fördersystem (43) zum Transportieren der Grundstruktur (4) von der G-Maschine (41) zu der PE-Maschine (42) umfasst und das Maschinensystem (40) eingerichtet ist ein Verfahren gemäß einem oder mehrerer der Ansprüche 1 bis 11 auszuführen.

13. Maschinensystem nach Anspruch 12,
**dadurch gekennzeichnet, dass**
die G-Maschine (41) ein 3D-Drucker (44) und/oder eine Spritzgussmaschine und/oder ein Speicher (45) für die Grundstrukturen (4) ist
und/oder
das Fördersystem (43) ein Förderband (47) und/oder ein Roboter (48) ist.

14. Maschinensystem nach Anspruch 12 oder 13,
**dadurch gekennzeichnet, dass**
das Maschinensystem (40) einen Roboter zum Bewegen der PE-Maschine (42) in einer Bewegungsbahn im Raum umfasst und die PE-Maschine (42) an dem Roboter befestigst ist, so dass die wenigstens eine Verstärkungsstruktur (1) in der erforderlichen Verbindungsposition auf der wenigstens einen Grundstruktur (4) herstellbar ist.

15. Maschinensystem nach einem oder mehreren der Ansprüche 12 bis 14,
**dadurch gekennzeichnet, dass**
das Maschinensystem (40) dahingehend ausgebildet ist, dass die pro Zeiteinheit von nur einer G-Maschine (41) zur Verfügung gestellten Grundstrukturen (4) kleiner sind als von nur einer PE-Maschine (42) pro Zeiteinheit hergestellten Verstärkungsstrukturen (1) für je eine Grundstruktur (4) und in dem Maschinensystem (40) die Anzahl der wenigstens einen G-Maschine (41) größer ist als die Anzahl der wenigstens einen PE-Maschine (42), insbesondere das Maschinensystem (40) über nur eine PE-Maschine (42) verfügt,
oder
das Maschinensystem (40) dahingehend ausgebildet ist, dass die pro Zeiteinheit von nur einer G-Maschine (41) zur Verfügung gestellten Grundstrukturen (4) größer sind als von nur einer PE-Maschine (42) pro Zeiteinheit hergestellten Verstärkungsstrukturen (1) für je eine Grundstruktur (4) und in dem Maschinensystem (40) die Anzahl der wenigstens einen PE-Maschine (42) größer ist als die Anzahl der wenigstens einen G-Maschine (41), insbesondere das Maschinensystem (40) über nur eine G-Maschine (41) verfügt.

## Claims

1. Method for producing a supporting structure (3) as a hybrid component (3) with a basic structure (4) and with at least one reinforcing structure (1), comprising the steps of:
- producing the at least one reinforcing structure (1) for in each case one basic structure (4), which is a machine for providing the basic structure,
- providing the basic structure (4) with a G-machine (41),
- connecting the at least one reinforcing structure (1) to the base structure (4), so that the at least one reinforcing structure (1) is connected to the base structure (4) in a connecting position and the base structure (4) together with the at least one reinforcing structure (1) forms the supporting structure (3),
wherein,
the production of the at least one reinforcing structure (1) for a respective base structure (4) is carried out by producing the at least one reinforcing structure (1) from a composite material with fibres and a matrix by means of pultrusion and/or by means of extrusion, and and a pultrusion unit (6) and/or an extrusion unit (7) is/are moved in space as a PE machine (42) for producing the reinforcing structure (1), so that the at least one reinforcing structure (1), after pultrusion and/or extrusion, is/are pultruded and/or extruded onto the base structure (4) at the required connection position in each case, and the at least one reinforcing structure (1) is/are and the at least one reinforcing structure (1) is connected to the base structure (4) by more than 50% with respect to the length of the respective reinforcing structure (1), so that the length of the connection between the reinforcing structure (1) and the base structure (4) is greater than 50% of the length of the reinforcing structure (1)
and
the method is carried out with a machine system (40) and in the machine system (40) the number of the at least one G machine (41) and the number of the at least one PE machine (42) are different and the basic structure (4) provided by the at least one G machine (41) is transported to the at least one PE machine (42) with a conveyor system (43).

2. Method according to claim 1,
**characterised in that**
the basic structure (4) is produced with the at least one G-machine (41)
and/or a plurality of basic structures (4) are made available with the at least one G machine (41) and are transported with the conveyor system (43) to the at least one PE machine (42) and the reinforcing structures (1) are produced on the basic structures (4) with the at least one PE machine (42).

3. Method according to claim 1 or 2,
**characterised in that**
the at least one reinforcing structure (1) is connected to the base structure (4) by more than 70%, 80% or 90% with respect to the length of the respective reinforcing structure (1), so that the length of the connection between the reinforcing structure (1) and the base structure (4) is greater than 70%, 80% or 90% of the length of the reinforcing structure (1).

4. Method according to one or more of the preceding claims,
**characterised in that**
the basic structures (4) provided per unit of time by only one G machine (41) have a difference from the reinforcing structures (1) produced per unit of time by only one PE machine (42) for one basic structure (4) in each case, which difference is greater than 20%, 30% or 50%.

5. Method according to one or more of the preceding claims,
**characterised in that**
the basic structure (4) provided by the at least one G machine (41), in particular basic structures (4), is or are transported to the at least one PE machine (42) by a conveyor system (43) in the form of a conveyor belt (47) and/or robot (48).

6. Method according to one or more of the preceding claims,
**characterised in that**
after the production of the at least one reinforcing structure (1) on the base structure (4), the base structure (4) with the at least one reinforcing structure (1) is transported back from the at least one PE machine (42) to the at least one G machine (41) by the conveyor system (43) and a further base structure (4) is applied to the already produced reinforcing structure (1) as an additional base structure (4) by the at least one G machine (41).

7. Method according to one or more of the preceding claims,
**characterised in that**
the basic structures (4) provided by only one G machine (41) per unit of time are smaller than the reinforcing structures (1) produced by only one PE machine (42) per unit of time for one basic structure (4) in each case and the number of at least one G machine (41) in the machine system (40) is greater than the number of at least one PE machine (42), in particular the machine system (40) has only one PE machine (42)
or the basic structures (4) provided by only one G machine (41) per unit of time are greater than the reinforcing structures (1) produced by only one PE machine (42) per unit of time for one basic structure (4) in each case and the number of at least one PE machine (42) in the machine system (40) is greater than the number of at least one G machine (41), in particular the machine system (40) has only one G machine (41).

8. Method according to one or more of the preceding claims,
**characterised in that**
different basic structures (4) are produced with the G machine (41)
and/or different reinforcing structures (1) are produced with the PE machine (42)
and/or the method is carried out with a machine system (40) according to one or more of claims 12 to 15.

9. Method according to one or more of the preceding claims,
**characterised in that**
no movement relative to the base structure (4) is or are carried out with the pultruded
and/or extruded at least one reinforcing structure (1) after pultrusion and/or extrusion and placement on the base structure (4)
and/or the matrix of the pultruded and/or extruded reinforcing structure (1) hardens at the required bonding position on and/or to the base structure (4)
and/or the pultrusion and extrusion are carried out simultaneously and/or continuously.

10. Method according to one or more of the preceding claims,
**characterised in that**
for the production of the at least one reinforcing structure (1), pultrusion is carried out as the first step and extrusion is carried out as the second step, so that the at least one reinforcing structure (1) partially produced by pultrusion in the first step is or are reworked by extrusion in the second step
and/or the at least one reinforcing structure (1), preferably all reinforcing structures (1), is or are produced, in particular continuously, by moving the pultrusion unit (6) and/or extrusion unit (7), in particular continuously, in space in a movement path (26) at the required connection position at a distance from the base structure (4).

11. Method according to one or more of the preceding claims,
**characterised in that**
the at least one reinforcing structure (1) is connected as a rod (2) in its length to the base structure (4) by more than 50%, 70%, 80% or 90% on the outside (33).

12. Machine system (40) for producing a supporting structure (3) as a hybrid component (3) with a basic structure (4) and with at least one reinforcing structure (1), comprising:
- at least one G machine (41) for providing the basic structure (4),
- at least one PE machine (42) with a pultrusion unit (6) and/or an extrusion unit (7) for producing the at least one reinforcing structure (1),
**characterised in that**
the number of the at least one G machine (41) and the number of the at least one PE machine (42) are different and the machine system (40) comprises a conveyor system (43) for transporting the basic structure (4) from the G machine (41) to the PE machine (42) and the machine system (40) is set up to carry out a method according to one or more of claims 1 to 11.

13. Machine system according to claim 12,
**characterised in that**
the G-machine (41) is a 3D printer (44) and/or an injection moulding machine and/or a storage (45) for the basic structures (4)
and/or the conveyor system (43) is a conveyor belt (47) and/or a robot (48).

14. Machine system according to claim 12 or 13,
**characterised in that**
the machine system (40) comprises a robot for moving the PE machine (42) in a movement path in space and the PE machine (42) is attached to the robot so that the at least one reinforcing structure (1) can be produced in the required connection position on the at least one base structure (4).

15. Machine system according to one or more of claims 12 to 14,
**characterised in that**
the machine system (40) is designed in such a way that the basic structures (4) provided per unit of time by only one G machine (41) are smaller than the reinforcing structures (1) produced per unit of time by only one PE machine (42) for one basic structure (4) in each case, and in the machine system (40) the number of at least one G machine (41) is greater than the number of at least one PE machine (42), in particular the machine system (40) has only one PE machine (42),
or the machine system (40) is designed in such a way that the basic structures (4) provided per unit of time by only one G machine (41) are greater than the reinforcing structures (1) produced per unit of time by only one PE machine (42) for one basic structure (4) in each case, and in the machine system (40) the number of the at least one PE machine (42) is greater than the number of the at least one G machine (41), in particular the machine system (40) has only one G machine (41).

## Revendications

1. Procédé de fabrication d'une structure porteuse (3) en tant que composant hybride (3) avec une structure de base (4) et avec au moins une structure de renforcement (1), comprenant les étapes suivantes :
- fabrication d'au moins une structure de renforcement (1) pour chaque structure de base (4), qui est une machine destinée à fournir la structure de base,
- mise à disposition de la structure de base (4) avec une machine G (41),
- relier l'au moins une structure de renforcement (1) à la structure de base (4) de telle sorte que l'au moins une structure de renforcement (1) soit reliée à la structure de base (4) dans une position de liaison et que la structure de base (4) forme la structure de support (3) conjointement avec l'au moins une structure de renforcement (1),
dans laquelle,
la fabrication de l'au moins une structure de renforcement (1) pour chaque structure de base (4) est effectuée en fabriquant l'au moins une structure de renforcement (1) à partir d'un matériau composite avec des fibres et une matrice par pultrusion et/ou par extrusion et une unité de pultrusion (6) et/ou une unité d'extrusion (7) est déplacée dans l'espace en tant que machine PE (42) pour la fabrication de la structure de renforcement (1), de sorte que l'au moins une structure de renforcement (1) est pultrudée et/ou extrudée après la pultrusion et/ou l'extrusion respectivement à la position de liaison nécessaire sur la structure de base (4). et l'au moins une structure de renforcement (1) est reliée à la structure de base (4) à plus de 50 % de la longueur de la structure de renforcement respective (1), de sorte que la longueur de la liaison entre la structure de renforcement (1) et la structure de base (4) est supérieure à 50 % de la longueur de la structure de renforcement (1)
et
le procédé est exécuté avec un système de machines (40) et, dans le système de machines (40), le nombre de l'au moins une machine G (41) et le nombre de l'au moins une machine PE (42) sont différents et la structure de base (4) mise à disposition par l'au moins une machine G (41) est transportée avec un système de transport (43) vers l'au moins une machine PE (42).

2. Procédé selon la revendication 1,
**caractérisé en ce que**
la structure de base (4) est fabriquée avec l'au moins une machine G (41) et/ou
une pluralité de structures de base (4) sont mises à disposition avec l'au moins une machine G (41) et sont transportées avec le système de transport (43) vers l'au moins une machine PE (42) et les structures de renforcement (1) sont fabriquées avec l'au moins une machine PE (42) sur les structures de base (4).

3. Procédé selon la revendication 1 ou 2,
**caractérisé en ce que**
l'au moins une structure de renforcement (1), par rapport à la longueur de la structure de renforcement respective (1), est reliée à la structure de base (4) à plus de 70%, 80% ou 90%, de sorte que la longueur de la liaison entre la structure de renforcement (1) et la structure de base (4) est supérieure à 70%, 80% ou 90% de la longueur de la structure de renforcement (1).

4. Procédé selon l'une ou plusieurs des revendications précédentes,
**caractérisé en ce que**
les structures de base (4) fournies par unité de temps par une seule machine G (41) présentent une différence par rapport aux structures de renforcement (1) fabriquées par unité de temps par une seule machine PE (42) pour chaque structure de base (4), qui est supérieure à 20%, 30% ou 50%.

5. Procédé selon l'une ou plusieurs des revendications précédentes,
**caractérisé en ce que**
la structure de base (4) mise à disposition par l'au moins une machine G (41), en particulier des structures de base (4), est ou sont transportées vers l'au moins une machine PE (42) avec un système de transport (43) sous forme de bande transporteuse (47) et/ou de robot (48).

6. Procédé selon l'une ou plusieurs des revendications précédentes,
**caractérisé en ce que**
après la fabrication de l'au moins une structure de renforcement (1) sur la structure de base (4), la structure de base (4) avec l'au moins une structure de renforcement (1) est réacheminée avec le système de transport (43) de l'au moins une machine PE (42) vers l'au moins une machine G (41) et une autre structure de base (4) est appliquée sur la structure de renforcement (1) déjà fabriquée en tant que structure de base supplémentaire (4) avec l'au moins une machine G (41).

7. Procédé selon l'une ou plusieurs des revendications précédentes,
**caractérisé en ce que**
les structures de base (4) mises à disposition par unité de temps par une seule machine G (41) sont plus petites que les structures de renforcement (1) fabriquées par unité de temps par une seule machine PE (42) pour chaque structure de base (4) et, dans le système de machines (40), le nombre de l'au moins une machine G (41) est supérieur au nombre de l'au moins une machine PE (42), en particulier le système de machines (40) dispose d'une seule machine PE (42)
ou
les structures de base (4) mises à disposition par unité de temps par une seule machine G (41) sont plus grandes que les structures de renforcement (1) fabriquées par unité de temps par une seule machine PE (42) pour chaque structure de base (4) et, dans le système de machines (40), le nombre de l'au moins une machine PE (42) est plus grand que le nombre de l'au moins une machine G (41), en particulier le système de machines (40) ne dispose que d'une seule machine G (41).

8. Procédé selon l'une ou plusieurs des revendications précédentes,
**caractérisé en ce que**
différentes structures de base (4) sont fabriquées avec la machine G (41)
et/ou différentes structures de renforcement (1) sont fabriquées avec la machine PE (42) et/ou le procédé est mis en oeuvre avec un système de machines (40) selon une ou plusieurs des revendications 12 à 15.

9. Procédé selon l'une ou plusieurs des revendications précédentes,
**caractérisé en ce que**
avec l'au moins une structure de renforcement (1) pultrudée et/ou extrudée, après la pultrusion et/ou l'extrusion et la mise en place sur la structure de base (4), aucun mouvement n'est ou ne sont effectué(s) par rapport à la structure de base (4).
et/ou la matrice de la structure de renforcement (1) pultrudée et/ou extrudée durcit à la position d'assemblage requise sur et/ou à la structure de base (4) et/ou la pultrusion et l'extrusion sont effectuées simultanément et/ou en continu.

10. Procédé selon l'une ou plusieurs des revendications précédentes,
**caractérisé en ce que**
pour la fabrication de l'au moins une structure de renforcement (1), on effectue la pultrusion comme première étape et on effectue l'extrusion comme deuxième étape, de sorte que l'au moins une structure de renforcement (1) pultrudée, partiellement fabriquée dans la première étape, est ou sont retravaillée(s) dans la deuxième étape avec extrusion
et/ou l'au moins une structure de renforcement (1), de préférence toutes les structures de renforcement (1), est ou sont fabriquées, en particulier en continu, en déplaçant l'unité de pultrusion (6) et/ou l'unité d'extrusion (7), en particulier en continu, dans l'espace dans une trajectoire de déplacement (26) à la position d'assemblage requise à une distance de la structure de base (4).

11. Procédé selon l'une ou plusieurs des revendications précédentes,
**caractérisé en ce que**
l'au moins une structure de renforcement (1) est reliée à la structure de base (4) sous forme d'une barre (2) sur sa longueur à plus de 50%, 70%, 80% ou 90% sur le côté extérieur (33).

12. Système de machine (40) pour la fabrication d'une structure porteuse (3) en tant que composant hybride (3) avec une structure de base (4) et avec au moins une structure de renforcement (1), comprenant
- au moins une machine G (41) pour fournir la structure de base (4),
- au moins une machine PE (42) avec une unité de pultrusion (6) et/ou une unité d'extrusion (7) pour la fabrication d'au moins une structure de renforcement (1),
**caractérisé en ce que**
le nombre de ladite au moins une machine G (41) et le nombre de ladite au moins une machine PE (42) sont différents, et le système de machine (40) comprend un système de transport (43) pour transporter la structure de base (4) de la machine G (41) à la machine PE (42), et le système de machine (40) est adapté pour mettre en oeuvre un procédé selon une ou plusieurs des revendications 1 à 11.

13. Système de machine selon la revendication 12,
**caractérisé en ce que**
la machine G (41) est une imprimante 3D (44) et/ou une machine de moulage par injection et/ou un magasin (45) pour les structures de base (4)
et/ou le système de transport (43) est un tapis roulant (47) et/ou un robot (48).

14. Système de machine selon la revendication 12 ou 13,
**caractérisé en ce que**
le système de machine (40) comprend un robot pour déplacer la machine PE (42) dans une trajectoire de déplacement dans l'espace et la machine PE (42) est fixée au robot de sorte que l'au moins une structure de renforcement (1) peut être fabriquée dans la position d'assemblage requise sur l'au moins une structure de base (4).

15. Système de machine selon l'une ou plusieurs des revendications 12 à 14,
**caractérisé en ce que**
le système de machines (40) est conçu de telle sorte que les structures de base (4) mises à disposition par unité de temps par une seule machine G (41) sont plus petites que les structures de renforcement (1) fabriquées par unité de temps par une seule machine PE (42) pour chaque structure de base (4) et, dans le système de machines (40), le nombre de l'au moins une machine G (41) est supérieur au nombre de l'au moins une machine PE (42), en particulier le système de machines (40) dispose d'une seule machine PE (42), ou le système de machines (40) est conçu de telle sorte que les structures de base (4) mises à disposition par unité de temps par une seule machine G (41) sont plus grandes que les structures de renforcement (1) fabriquées par unité de temps par une seule machine PE (42) pour chaque structure de base (4) et, dans le système de machines (40), le nombre de l'au moins une machine PE (42) est plus grand que le nombre de l'au moins une machine G (41), en particulier le système de machines (40) ne dispose que d'une seule machine G (41).
